# EUROPEAN PATENT SPECIFICATION

(11) **EP 2 742 422 B1**
(45) Date of publication and mention of the grant of the patent: **23.11.2016**
(21) Application number: 11767138.8
(22) Date of filing: 28.09.2011
(51) Int. Cl.: G06F 9/44

(54) **CONTENT PREVIEW**
INHALTSVORSCHAU
PRÉVISUALISATION DE CONTENU

(30) Priority: 30.09.2010 US 895444
(43) Date of publication of application: 18.06.2014
(73) Proprietor: Apple Inc., Cupertino, CA 95014 (US)
(72) Inventor: ROBERT, Julien, F-75116 Paris (FR); JALON, Julien, F-75116 Paris (FR); BONNET, Olivier, F-75116 Paris (FR); LOOFBOURROW, Wayne, R., Cupertino, CA 95014 (US)
(74) Representative: Wardle, Callum Tarn
(86) International application number: PCT/US2011/053669
(87) International publication number: WO 2012/044679

(56) References cited:
- EP-A2- 1 465 060
- WO-A2-03/079133
- US-A1- 2006 069 990
- US-A1- 2006 074 869
- US-A1- 2006 265 417

## Description

### BACKGROUND OF THE INVENTION

Modern data processing systems, such as a Macintosh computer running the Macintosh operating system, can provide a preview of a file, such as a word processing document or a spreadsheet or a PDF file, etc. without having to launch the application which created or edited the file. The application that created the file can be considered or referred to as a native application. The preview can be generated by a non-native application which cannot edit or create the file, while the native application can edit or create the file. The non-native application can be considered or referred to as a non-native application because it cannot create or edit the file but it can present a view of the file and so it can act as a file viewer, and in one embodiment the non-native application can be a file viewer for a plurality of files of different types (e.g. text files, image files, PDF files, html files, movie files, spreadsheet files, PowerPoint files, etc.). Examples in the prior art of systems which can provide previews are described in published US Application Nos. 2008/0307343 2006/0069990 and 2009/0106674.

Modern data processing systems can also perform searches through data, such as metadata or content within a file, within a system and these searches can be useful to a user looking for one or more documents in a file system maintained by the data processing system. The search results can be presented in an abbreviated or "top hits" format. An example of a prior system which can provide such search capabilities is described in US Patent No. 7,630,971.

### SUMMARY OF THE DESCRIPTION

Methods, machine readable tangible storage media, and data processing systems that can present previews of content are described.

In one embodiment, a system can use a non-native application to present a preview of content of a document that is referred to by a link in another document which is being presented through a first application. A method according to this embodiment can include presenting a first document through a first application and detecting a first input on a link, presented within the first application, to external data that is not accessible to the first application. The external data can be a second document having content which can be presented by, in one embodiment, the non-native application which is different than the first application. In response to the first input, the method can present a preview of the content of the external data while continuing to display the first document using the first application. In this manner, a preview of the content of the external data, such as the second document, can be provided by the non-native application while the user is continued to be presented with the content of the first document through the first application and without leaving the first application. In one embodiment, an example of this method involves presenting an email within an email application, wherein the email includes a link, such as a URL or a street address or a file name, etc. The method can detect an input on the link, such as the hovering of a cursor over the link for a period of time or a user gesture with a cursor or a user's finger or set of fingers, etc. In response to detecting this input, the system can invoke the non-native application to present a preview of the external data, which can be a web page referenced by the link or URL or can be a map referenced by the street address, etc. The preview can be presented in a bubble or window or panel next to the link and optionally overlapping at least a portion of the email. The email program can be the focus for the front most application, and have key input and cursor input, both before and after the preview is presented. In this manner, the user can view the content of the external data without leaving the email or email program and without obscuring, in one embodiment, at least a portion of the content of the email. In one embodiment, the first application can be configured to create or edit the first document and the non-native application cannot edit or create the first document or the second document but can provide a view of the first document or the second document. In one embodiment, the preview can be user interactable to allow the user to perform at least one of scrolling of the second document or paging through the second document or zooming the second document or playing a movie in the second document, etc. The method can optionally include detecting a data type of the link, wherein the data type is one of a URL, a street address, a calendar or calendar entry, a phone number, an email address, an ISBN book number or a file name, and the result of this detecting can be provided to the non-native application so that it can use the proper methods, knowing the type of the data, to retrieve and present the content. The method can optionally also include presenting one or more user selectable user interface elements (such as a button) with the preview of the content, and these elements can be selected based on the type of data that was detected. For example, if the data type detected by the method indicates that the data type is a calendar or calendar entry, the method can optionally present one or more user selectable buttons in the preview of the content of the calendar or calendar entry, and these one or more user selectable buttons, when selected by a user, can cause an action such as launching a calendar application to create a new calendar event or entry (if the button indicated that the action was to create a new calendar event, for example). In other words, the data detection that detects data types can select appropriate user selectable UI elements that are presented with the preview by a non-native application and when a user selects one of these UI elements, an action can be invoked using the native application, and this action is based on the detected data type and is appropriate for that type of detected data type. Hence, the content of the preview dictates the user selectable UI elements which in turn dictate the actions which will be appropriate for the type of data that is detected.

In another embodiment, a method for presenting a preview can include presenting a first document through a first application, and detecting a first data within the first document, and receiving a first input proximate to the first data, and presenting, in response to the first input, a user interface element. The user interface element can indicate to the user that a preview of content, referred to by the first data that was detected within the first document, can be presented in response to activation of the user interface element. In response to receiving an input on the user interface element, the system can present a preview of content referenced by the first data while continuing to present the first document. An example of this method can be provided for a word processing document which contains within it one or more street addresses which are detected as described further herein. The detection of the street addresses by the system allows the system to accept an input proximate to the street addresses, such as hovering a cursor over the street address within the word processing document, and then the system can present, in response to the input over the street address, a user interface element which indicates to the user that a preview of content relating to that street address can be provided by selecting the user interface element. In response to the selection of the user interface element, the system can present, in one embodiment, a map of the street address showing the location of a house or building or other object at the street address in the word processing document.

In one embodiment, the detecting of the data in the first document can be performed by a second application that is configured to detect at least one of a URL (Uniform Resource Locator), a street address, an image file name or other data, and also detecting the type of the data ("data type") and the preview can be provided by a non-native reader application that is different than the first application which is configured to create or edit the first document. Data detectors can be used to detect the data type of the link, and the detected data type can be provided to a preview generator so that the preview generator can, in one embodiment, select a proper routine to retrieve and present the content, based on the detected data type. The detecting of the first data by, for example, the second application, can occur before receiving the input on the first data or can occur after receiving the input. In one embodiment, the preview can be configured to be user interactable and can be displayed in a bubble that overlaps with the window displayed by the first application which presents the first document. In one embodiment, the preview can include user selectable UI elements that are determined or selected based on the type of data detected in the content of the preview, and these user selectable UI elements can, when selected, cause an action that is appropriate for the detected content.

Another aspect of the present invention relates to the presentation of search results. An embodiment of a method according to this aspect can include presenting a list of results of a search and receiving an input that indicates a selection of an item in the list of results and displaying, in response to the input, a preview of a content of the selected item. The preview can be provided in a view that is adjacent to the list of the results of the search and that points to the item that was selected. The preview can be displayed with a non-native application and can be displayed concurrently while the list is also displayed. The list can be an abbreviated list of the search results such that only some of the results of the search are displayed. In one embodiment, the list can include a "show all" command or a similar command to allow a user to see all of the search results when the list is abbreviated. In one embodiment, the preview can be an interactable view of the content, allowing the user to scroll through or page through or zoom through, etc. the content within the preview while the search results are also being displayed. In one embodiment, the search can be through metadata of the file or indexed content of the files or both. The indexed content can be a full text index of all non-stop words within the content of the files. In one embodiment, the search can be initiated from a search input field that is activated from a menu region along an edge of a display screen, and the list can be displayed adjacent to one or two sides of the display screen. In one embodiment, the view can be a bubble that cannot be moved while the item is selected, but selecting another item from the list causes the presentation of another bubble that is adjacent to the list and that points to the another item in the list. In one embodiment, cursor movement in the list of results and/or keyboard inputs directed to the list can be observed to determine which items in the list of the search results are the most likely to be selected, and based on a determination of those items that are the most likely to be selected, a preview generator can process content, for display within the bubble, for those items before processing content, for display within the bubble, of other items in the list that are less likely to be displayed. The processing of the content for display within the bubble can be a pre-processing operation which occurs before the displaying of the content within the bubble, and this pre-processing can be performed in an order based on the dynamic cursor movements within the list of results of the search.

Another aspect of the present invention relates to one or more methods for providing a preview of a file in the context of a list of files, such as a list of files presented by a user interface program for a file management system in a data processing system. In one embodiment, a method can include displaying a list of files in a region of a display screen and receiving a first input that indicates a request to display a preview of a selected file in the list of files. The first input can be different than a second input that is used to open the selected file in a native application in response to the second input. The system can, in response to the first input, then present a preview of content of the selected file while the list of files is still being displayed in the region of the display screen. The preview can be displayed with a non-native application in a bubble that is adjacent to the list of files and that points to the selected file. In one embodiment, the preview can be user interactable such that the preview is configured to receive an input to cause it to scroll or to zoom or to page through the preview, etc. With this method, a user can browse through a list of files to obtain a user interactable preview which points to the particular selected file.

The above summary does not include an exhaustive list of all aspects of the present invention. It is contemplated that the invention includes all systems and methods that can be practiced from all suitable combinations of the various aspects summarized above, and also those disclosed in the Detailed Description below.

### BRIEF DESCRIPTION OF THE DRAWINGS

The present invention is illustrated by way of example and not limitation in the figures of the accompanying drawings in which like references indicate similar elements.
**Figure 1** is a flow chart showing a method according to one embodiment of the present invention.
**Figures 2A, 2B****,** **2C,** and **2D** provide an example of user interfaces which can be provided according to a method shown in **Figure 1****.**
**Figures 3A****,** **3B****,** **3C****,** **3D,** and **3E** provide further examples of user interfaces which can be provided according to an embodiment of a method shown in **Figure 1****.**
**Figures 4A** and **4B** provide an example of a user interface for presenting previews of files in conjunction with a user interface for a file management system.
**Figures 5A, 5B****,** **5C,** and **5D** provide examples of user interfaces for providing previews of items which are presentable in views from a dock, according to one embodiment of the present invention.
**Figure 6A** is a flow chart showing an example of a method according to one embodiment of the present invention.
**Figure 6B** is a flow chart showing a method according to another embodiment of the present invention.
**Figures 7A, 7B****,** **7C, 7D****,** and **7E** provide examples of user interfaces which can be provided as part of a method shown in **Figure 6A** or a method shown in **Figure 6B****.**
**Figure 8** is a block diagram of a system for generating previews in a data processing system according to one embodiment of the present invention.
**Figure 9** is a table indicating the different types of link data and their associated previews which can be generated in response to the link data according to one or more embodiments described herein.
**Figure 10** illustrates a block diagram of an exemplary API architecture useable in some embodiments of the present invention.
**Figure 11** shows an exemplary embodiment of a software stack useable in some embodiments of the present invention.
**Figure 12** shows, in block diagram form, an example of a data processing system which can be used with one or more embodiments described herein.

### DETAILED DESCRIPTION

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment. The processes depicted in the figures that follow are performed by processing logic that comprises hardware (e.g. circuitry, dedicated logic, etc.), software, or a combination of both. Although the processes are described below in terms of some sequential operations, it should be appreciated that some of the operations described may be performed in a different order. Moreover, some operations may be performed in parallel rather than sequentially.

The present description includes material protected by copyrights, such as illustrations of graphical user interface images. The owners of the copyrights, including the assignee of the present invention, hereby reserve their rights, including copyright, in these materials. The copyright owner has no objection to the facsimile reproduction by anyone of the patent document or the patent disclosure, as it appears in the Patent and Trademark Office file or records, but otherwise reserves all copyrights whatsoever. Copyright Apple Inc. 2010.

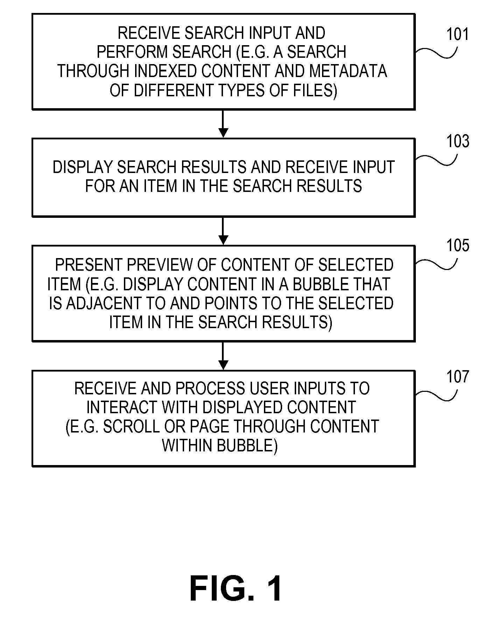

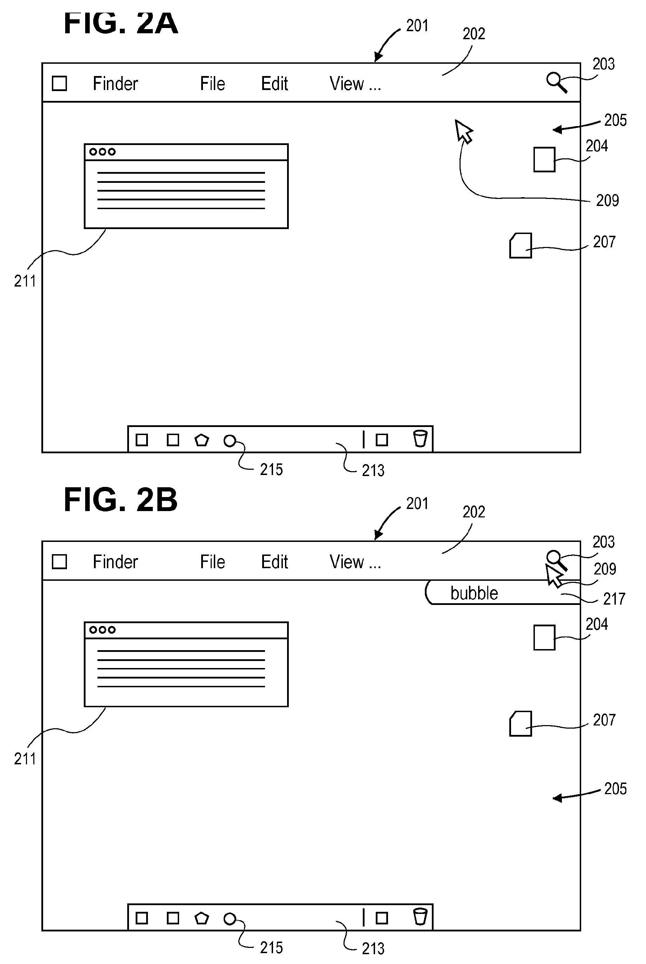

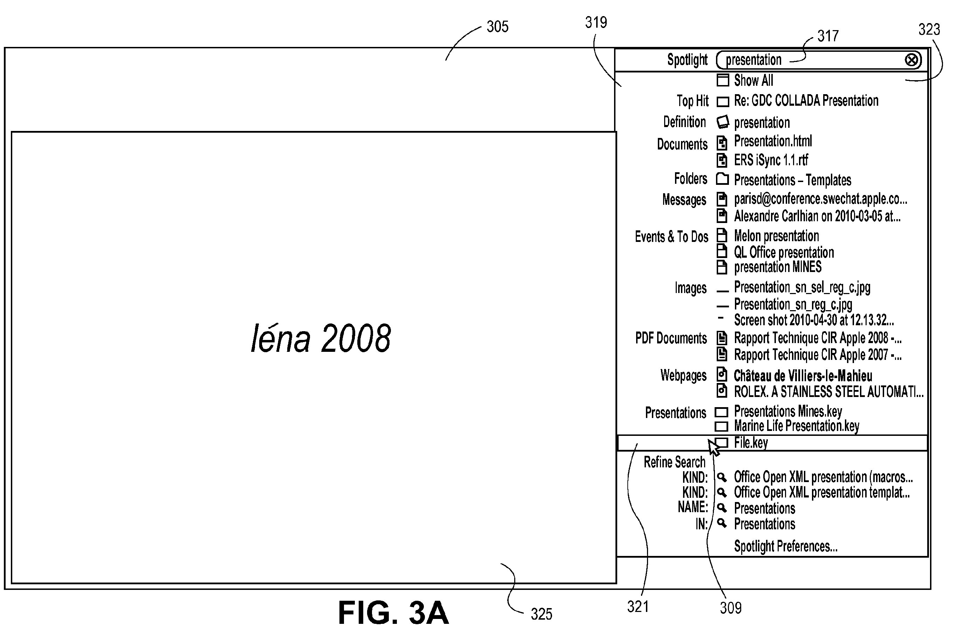

**Figure 1** shows a method according to one embodiment of the present invention for presenting previews in the context of an abbreviated, in one embodiment, search results list. Examples of user interfaces that can be implemented according to this method are provided in **Figures 2A-2D** as well as **Figures 3A-3E****.** The method can begin in operation 101 in which a search input is received, and the system responds by performing a search through a set of files. In one embodiment, the search can be performed through indexed content of the full text content of the files; in addition or alternatively, the search can be performed through metadata of different types of files. One example of the type of searches which can be performed is provided in US Patent 7,630,971. The system can begin to display search results as the user types and before the user is finished typing, in one embodiment. The search results can be displayed in an abbreviated list which does not present all of the hits or results from the search. In one embodiment, this list of abbreviated hits can be referred to as "top hits" list and can include a "show all" option which is selectable by a user to cause the system to display all the search results in a window which can be scrolled or resized or both. After the search results have been displayed in operation 103, the system can receive an input for an item in the search results. In one embodiment, this can involve hovering a cursor over one of the selected items or making a gesture with one or more fingers of the user, etc. In response to the input received in operation 103, the system can present a preview of the content of the selected item in operation 105 through a preview generator. For example, the system can display the content in a bubble that is adjacent to and points to the selected item in the search results. In one embodiment, the system can optionally provide an interactable preview which allows user inputs to interact with the displayed content, such as scrolling or paging through the content within the bubble as it is concurrently displayed with the list of search items found in the search.

In one embodiment, the system can pre-process the content for display in the bubble based upon a determination of items that are more likely to be requested by a user based upon cursor movements or finger movements or keyboard inputs directed toward the list of search results (which can include a list of URLs). The order of the pre-processing can be determined, in one embodiment, from the dynamic cursor or finger movements over time as a user moves a cursor or finger or stylus over the list of search results. The order can be provided to a preview generator in the form of an ordered array containing a list of URLs (Uniform Resource Locator) that will likely be needed in the near future. Optionally, the list can be indicated to be an exclusive list of all items in the list of search results that are likely to be requested in the near future. The preview generator can then use this list to prioritize its content pre-processing operations and its content caching operations; for example, the preview generator can generate images (e.g. PNG images or other image formats) from the content and store those images in a cache of the images in an order that is prioritized by this list of URLs.

The system can determine this list by observing mouse movement over time and keyboard input over time to determine which URLs are most likely to be needed in the near future. Items that are under the mouse cursor as well as those that are nearby are listed first, with those nearby in the direction the cursor has been moving prioritized ahead of those in the opposite direction. The preview generator uses the list as a work list to pre-load images for potential display in a bubble into its cache. If the list is marked exclusive by the system, the preview generator can cancel any work in progress on computing images for a bubble not in the list. Note that such items are not necessarily removed from the cache if they are already fully computed, unless the cache is full, in which case sufficient non-listed items are removed from the cache to allow all of the listed items to be stored in the cache. If the list is in likelihood order, the preview generator can perform work on the most likely URLs before less likely URLs. Additionally, if the cache cannot hold all the items, but only N items, then only the first N items in the list need to be computed and stored in the cache. If an item has already been computed in the cache, there is no need to recompute it even if it is on the list. The result is that the bubble is likely to have already been computed by the time the user requires it to be displayed, and there is less delay (or none) before the content of the bubble is visible.

Operation 107 can involve displaying the result of the user's interaction with the preview while the list of search results is concurrently displayed in operation 107.

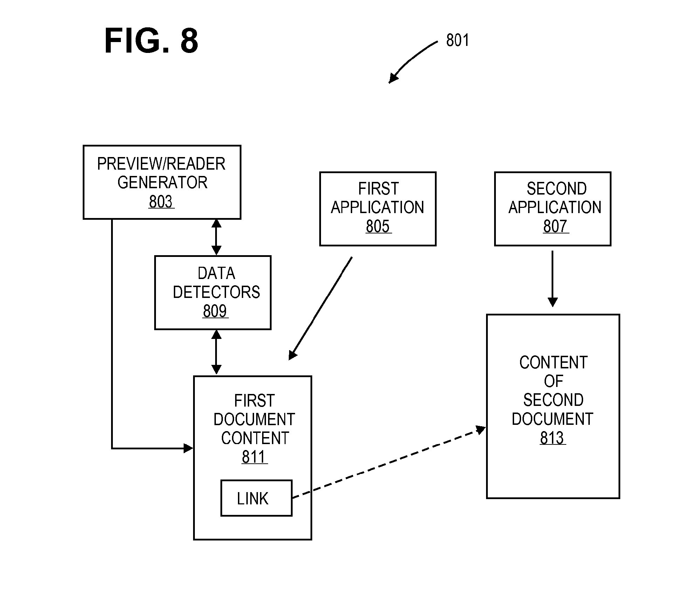

In one embodiment, the method of **Figure 1** can be implemented through a preview generator which is a non-native application that can generate previews of many different types of files, such as word processing files, spreadsheet files, PowerPoint slide files, PDF files, movie files, HTML files, XML files, image files, etc. and, in one embodiment, the non-native application can present the content of these different types of files but cannot edit or create these different types of files. An example of a preview generator is provided below in conjunction with **Figure 8****,** and this preview generator can be used in an embodiment of the method according to **Figure 1****.** In one embodiment, the search can be initiated from a search input field that is activated from a menu region along an edge of the display screen, and the list of search results can be displayed adjacent to at least one side of the display screen. In one embodiment, the preview can be displayed in a view that is a bubble that cannot be moved. The selection of another item from the search results list causes the presentation of another bubble that is adjacent to the list and displayed concurrently with the list and that points to the another item in the list which was selected.

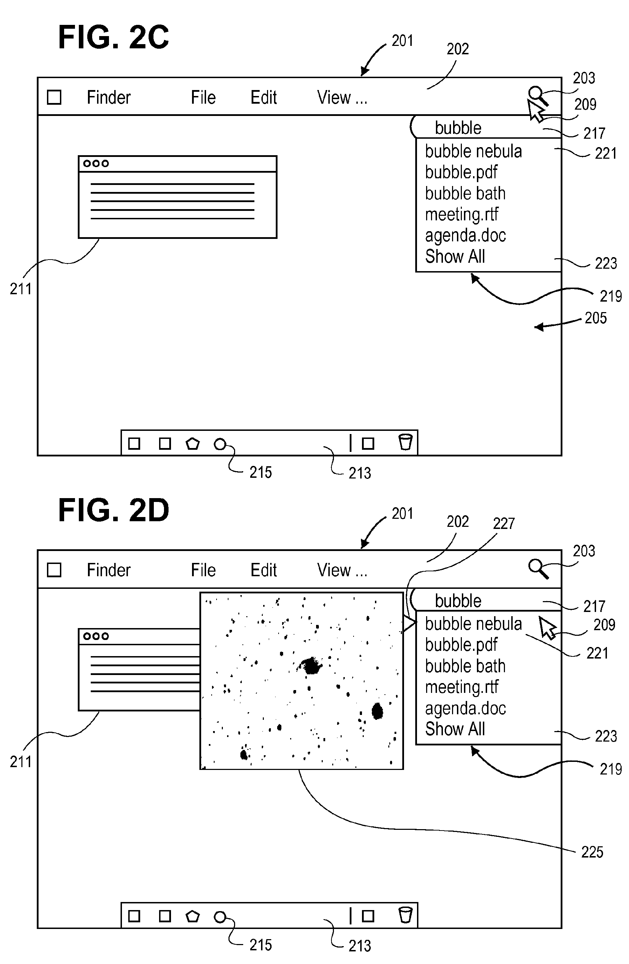

**Figures 2A, 2B****,** **2C,** and **2D** provide an example of user interfaces which can be provided in one embodiment of a method according to **Figure 1****.** The user interface includes a display screen 201 which can be a liquid crystal display or other display device displaying the user interface which includes menu bar 202 which has a search request icon 203 at an edge of the display screen. The user interface also includes desktop 205 which can display one or more windows and icons on the desktop, such as storage icon 204 and icon 207, where an icon 207 is an icon representing a file which a user has placed on the desktop. The desktop can also display one or more windows for one or more programs. In the example shown in **Figure 2A****,** it is assumed that window 211 is a Finder window, but it could be a window of another application. The Finder is an example of a user interface program for a file management system in the Macintosh operating system and it is shown as the front most application by the name "Finder" in the menu bar 202 of **Figure 2A****.** In the embodiment shown in **Figure 2A****,** a cursor 209 is displayed, and this cursor can be controlled by any known cursor control device, such as a mouse or trackpad; in alternative embodiments, a touch screen or touch pad can be employed with or without a cursor, and user interaction with the system occurs through touches on the touch pad or touch screen as is known in the art. The user interface shown in **Figure 2A** can also include a dock 213 which is an example of a program control region disposed on the edge of a display screen. Dock 213 can include icons representing application programs which can be launched or otherwise controlled from dock 213. Icon 215 is an example of a program application in one embodiment. While search request icon 203 is shown in the corner of display screen 201, it can be appreciated that alternative positions for the search request icon can include the presentation of the search request icon or the word "search", etc. in response to the activation of a menu option at the edge of the display screen, such as at the corner of a display screen 201 which in turn results in the presentation of a search request icon or a search input field. An example of such an alternative presentation of a search request icon or search input field is provided in Windows 7 (from Microsoft Corporation of Redmond, Washington) with the start menu in Windows 7 at the corner of a display screen; the activation of the start menu can produce a search input field which is similar to search input field 217.

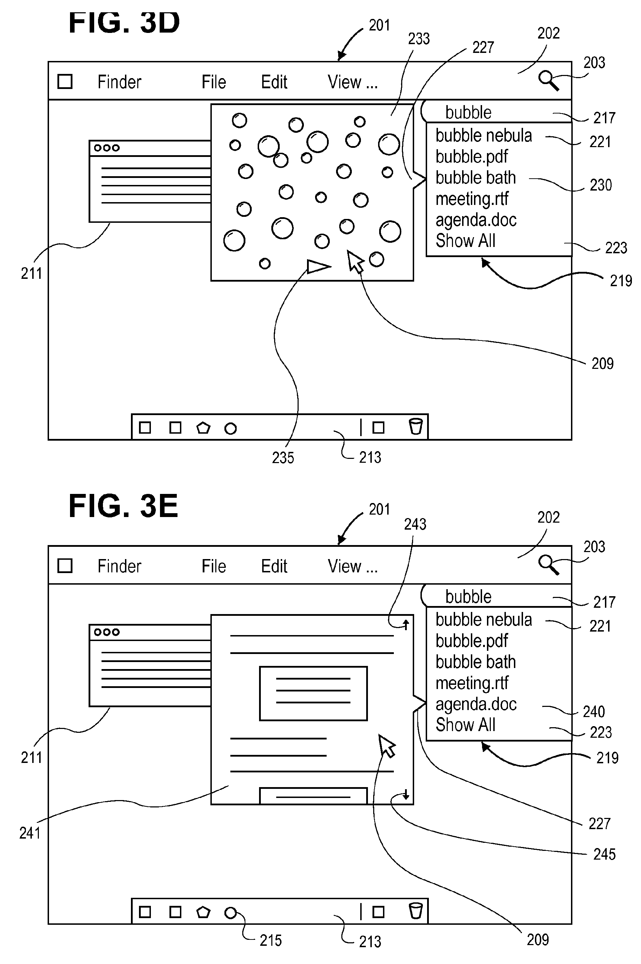

As shown in **Figure 2B****,** a user can position a cursor near search request icon 203 and signal to the data processing system that a search is being requested. In one embodiment, this can include placing the cursor near a search request icon 203 and pressing a button, such as a mouse's button or a key on a keyboard. In another embodiment, the user can activate the search input field by pressing a button (e.g. the space bar button when the Finder has the keyboard focus) on the keyboard without positioning cursor 209 near search request icon 203. In another embodiment, a predetermined user gesture with one or more fingers of a user on a touch screen or touch pad can also be interpreted as a search request, causing the presentation of search input field 217 as shown in **Figure 2B****.** The system can perform a search as the letters are typed or entered by the user or after the user enters a return key or provides another signal that the search request or search input has been completed. The result of the search, in one embodiment, is shown in **Figure 2C** in which a search results panel 219 is presented along an edge of the display screen. The search input field 217 remains displayed with the search input and search result items are displayed within search results panel 219. Search results panel 219 also includes a "show all" command 223 which a user can select to provide a list of all the search results. In one embodiment, search results panel 219 presents an abbreviated list of the most relevant or most recent results (or some other criteria or combination of criteria) which match the search. It can be seen that a plurality of different file types are included in the search results, including a PDF file, a Microsoft Word file, a Rich Text Format file, a movie file ("bubble bath"), and an image file ("bubble nebula"). A user can select, in one embodiment, any one of the search results items displayed in search results panel 219 by, in one embodiment, hovering a cursor over that item. This is shown in **Figure 2D** in which a user has hovered or otherwise positioned cursor 209 over search results item 221, which causes the presentation of preview panel 225 which shows the content of the "bubble nebula" picture file. Preview panel 225 includes pointer 227 which points to the selected item. Changing the position of cursor 209 over search results panel 219 provides the presentation of different previews for the different files as shown further in **Figures 3D** and **3E****,** which will be described further below. It can be seen that a preview of the content of each file can be provided concurrently while the abbreviated search results is also displayed in search results panel 219 in one embodiment. It can be seen from Figure 2D that preview panel 225 is immediately adjacent to the concurrently displayed search results panel 219 which, in one embodiment, provides an abbreviated list of search results or search hits. This provides the advantage that a user is provided with an abbreviated list which often will contain the most relevant documents, and then the user can browse through each or any one of the documents while the search results are displayed in search results panel 219 by causing a preview panel to appear adjacent to the search results panel. Hence, the user can quickly scan through or browse through items in the abbreviated search results list and display a preview for each item concurrently with the search results displayed to allow a user to more efficiently find one or more documents according to this embodiment. In one embodiment, the ability to quickly scan through items in the abbreviated search results list can be enhanced by pre-processing the items in the list based upon dynamic, over time, cursor or finger movements (or keyboard inputs over time) as described herein.

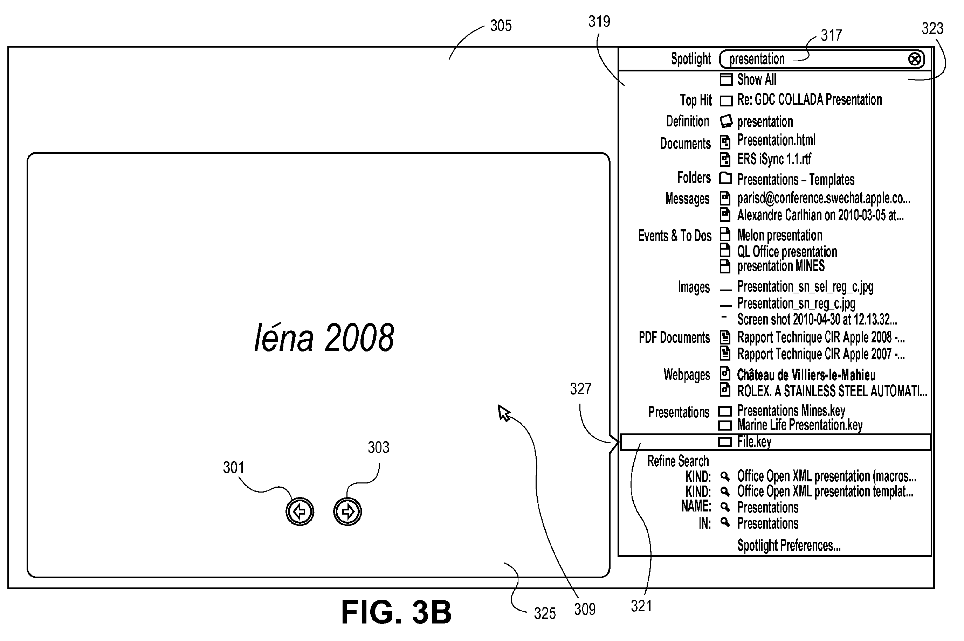

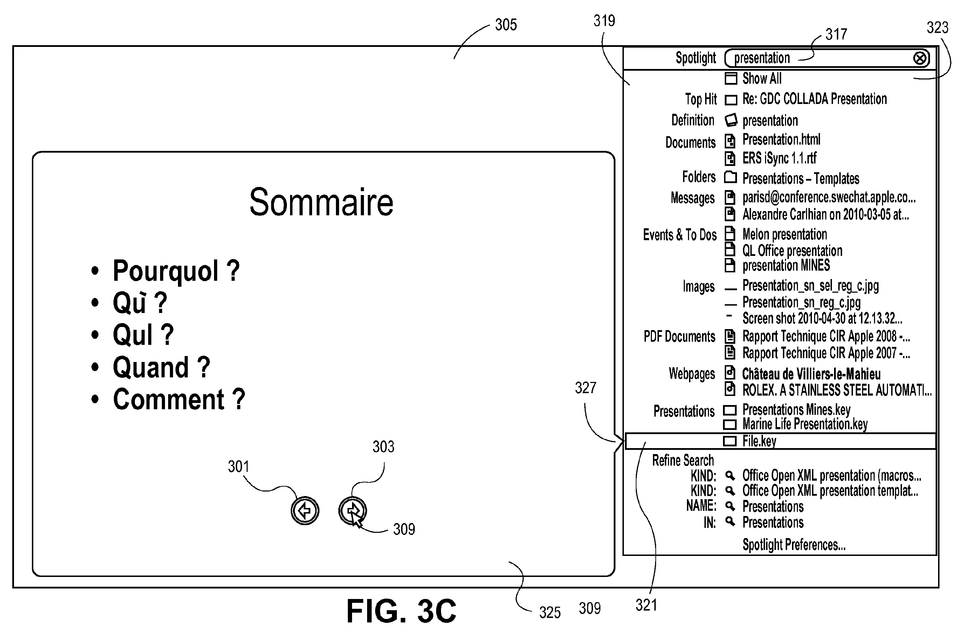

**Figures 3A****,** **3B****,** **3C****,** **3D,** and **3E** provide other examples of user interfaces which can provide an embodiment of a method according to **Figure 1****.** In these user interfaces, the previews are user interactable. For example, the user can scroll through pages of a document or play a movie or page through a document or scroll up and down or scroll left and right in a document all within the preview mode or view displayed adjacent to a search results list such as an abbreviated search results list.

In the example shown in **Figures 3A****,** **3B****,** and **3C****,** the abbreviated search results list is grouped by categories and includes a top hit item and a "show all" command 332. The categories include dictionary definitions, items within a particular folder ("Documents"), folders, email messages, events and to do items, images, PDF documents, presentations, etc. Hence, images, such as JPEG files are grouped together in the abbreviated search results, and PDF files are grouped together, etc. as can be seen from **Figures 3A****,** **3B****,** and **3C****.** A user can position a cursor to select a file from the abbreviated search results panel 319 to cause the presentation of a preview, such as preview panel 325. It can be seen from **Figure 3A** that the user has hovered, in one embodiment, the cursor 309 over search results item 321 to cause the presentation of a preview of the content of a presentation file which can be a PowerPoint file or a Keynote file, etc. In the case shown in **Figures 3A****,** **3B****,** and **3C****,** the file is a Keynote file, wherein Keynote is a presentation application which is similar to Microsoft's PowerPoint application. Preview panel 325 is user interactable in that the user can page through, using back button 301 and forward button 303, the content of the file within preview panel 325. As shown in **Figure 3B****,** the user has moved the cursor 309 into the preview panel 325, causing the presentation of back button 301 and forward button 303. The user can then interact with those buttons by hovering the cursor 309 over the buttons to cause different pages of the presentation to be displayed. As shown in **Figure 3C****,** the user has hovered the cursor 309 over the forward button 303 and has presented a page within the presentation other than page 1 which is shown in **Figure 3A****.** The preview panel 325 can include a pointer 327 which points to the currently selected item that is being previewed while the abbreviated search results list is displayed in search results panel 319 along with search input field 317 which still indicates the search input that was entered into the search input field 317. The presentation of the abbreviated search results list in search results panel 319 and preview panel 325 occurs on top of desktop 305 as shown in **Figures 3A****,** **3B****,** and **3C****.**

**Figures 3D** and **3E** provide another example of user interactable previews which can be presented adjacent to and concurrently with search results panel 219 in one embodiment of the present invention. In the example shown in **Figure 3D****,** the user has selected search results item 230 from the abbreviated search results shown in search results panel 219 and has caused, by that selection, the presentation of a preview of the content of the selected file in preview panel 233 which includes a pointer 227 which points to the selected search results item 230. It can also be seen that the user has positioned cursor 209 in the content of preview panel 233 which, in one embodiment, can cause the presentation of a play button to play the movie showing the "bubble bath." Play button 235 can be selected by, in one embodiment, positioning cursor 209 over play button 235. Other techniques for selecting the play button can include one or more gestures of a user's finger on a touch screen, or other techniques known in the art.

**Figure 3E** shows another example of a user interactable preview which can include a scroll up button 243 and a scroll down button 245 to allow scrolling of preview content 241 within a preview panel displayed adjacent to search results panel 219 as shown in **Figure 3E****.** In this example, the user has positioned cursor 209 within preview content 241 within the preview panel which is adjacent to and displayed concurrently with search results panel 219 which can, in one embodiment, be the presentation of an abbreviated search results as described above. Also as described above, the search can be through at least of metadata of files within a file management system and indexed content of those files as described above. The search can be initiated by entering the search query into the search input field 217 as described above, producing the results shown in search results panel 219. Arrow 227 points to the selected file 240 within search results panel 219. The user can position cursor 209 within the preview content 241 which can, in one embodiment, cause the presentation of the scroll up button 243 and the presentation of the scroll down button 245. The user can select either of those buttons to cause scrolling in a vertical direction; in one embodiment, the user can hover cursor 209 over one of the buttons to cause either a scroll up or a scroll down depending upon the button which is selected. In this way, the content of the file "agenda.doc" can be viewed in this preview mode even though the document is multiple pages, by scrolling up or down while the preview is presented in the preview panel adjacent to the search results shown within search results panel 219.

Again, the search results panel can display an abbreviated list of the search results found from the search, and this can provide a quicker way for the user to find the most relevant files from the abbreviated list and be able to also scroll within a multiple page file to determine whether or not the appropriate document has been found. The user interaction with a preview can be configured such that the content can be scrolled through or paged through or the content can be zoomed (e.g. scaled up or scaled down to magnify or demagnify a view) or to play a movie in the content, etc.

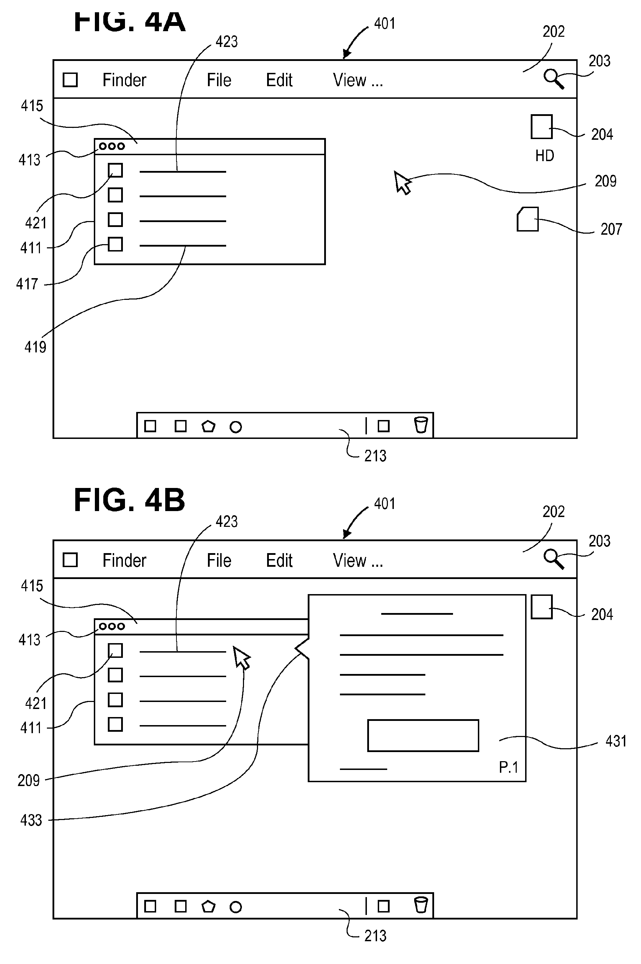

**Figures 4A** and **4B** show an example of a user interface for providing a preview associated with a selected file from a list of files in a user interface program for a file management system. The Finder from Apple Inc. of Cupertino, California is an example of a user interface program for a file management system. Windows Explorer from Microsoft of Redmond, Washington is another example of a user interface program for a file management system, and other such user interface programs are known in the art. This aspect of the present invention can apply to any one of those user interface programs even though the Finder program has been given as an example in **Figures 4A** and **4B****.** The user interface of **Figures 4A** and **4B** includes a display screen 401 which can be a display screen on a liquid crystal display or other display device. The user interface can include one or more menu bars 202 and a search request icon 203 which have been described previously. A cursor 209 can be displayed on a desktop in those embodiments in which a cursor is used, such as embodiments which employ a mouse or trackpad or other cursor control device to control the cursor. In alternative embodiments, a touch screen or touch pad may be employed with or without a cursor, as has been described herein. The user interface can include a dock 213 or other examples of a program control region disposed on an edge of the display screen. One or more windows or one or more programs can be displayed on top of the desktop. In the example shown in **Figure 4A****,** a window of the Finder program, showing files within a file management system, is displayed on the desktop. Window 411 contains, in this example, four files represented by icons including icons 417 and 421, and each of the files includes a name associated with the corresponding icon, which is the name of the file, such as names 419 and 423. Each window, such as Finder window 411 can include a title bar 415 which can include the name of the folder or subpath or subdirectory containing the files shown within window 411. Moreover, the title bar 415 can control standard window control icons 413 which, when activated, can be used to close a window or minimize a window or maximize a window. The user can select a particular file within window 411 through one of a variety of known techniques such as hovering a cursor over the file or selecting the file by pressing a mouse's button while the cursor is hovered over the name of the file or the icon of the file, etc. The user can also indicate a command to generate a preview for a selected file by, for example, pressing the space bar key or selecting a preview command from a pop-up menu, etc. In response to the selection of the file and the selection of a preview command, a preview can be presented as shown in **Figure 4B****.** This preview can be presented adjacent to and pointing to the selected file. The pointer 433 is an optional pointer attached to the preview panel which displays preview content 431. The preview can be user interactable in that it can allow a user to page through or scroll through or zoom in or zoom out of the content of the file or play a movie within the file, etc.

The user interface shown in **Figures 4A** and **4B** can provide a method for presenting a preview which includes displaying a list of files in a region of a display screen and receiving a first input that indicates a request to display a preview of a selected file in the list of files. Window 411 includes a list of files in a file management system as is presented by the user interface program Finder for that file management system. The input to display a preview can be different than an input to open the selected file in a native application. In response to the input to display a preview, a preview panel can be displayed showing the content of the selected file while the list of files is still displayed on the display screen. This can be seen in **Figure 4B** in which the preview panel is displayed concurrently with the list of files including the file that was selected. The preview, in one embodiment, can be displayed by a non-native application that cannot edit or create the selected file but can present the content of the selected file which can be one of a plurality of different types of files such as text files, image files, PDF files, html files, web pages, movie files, spreadsheet files, PowerPoint files, etc.

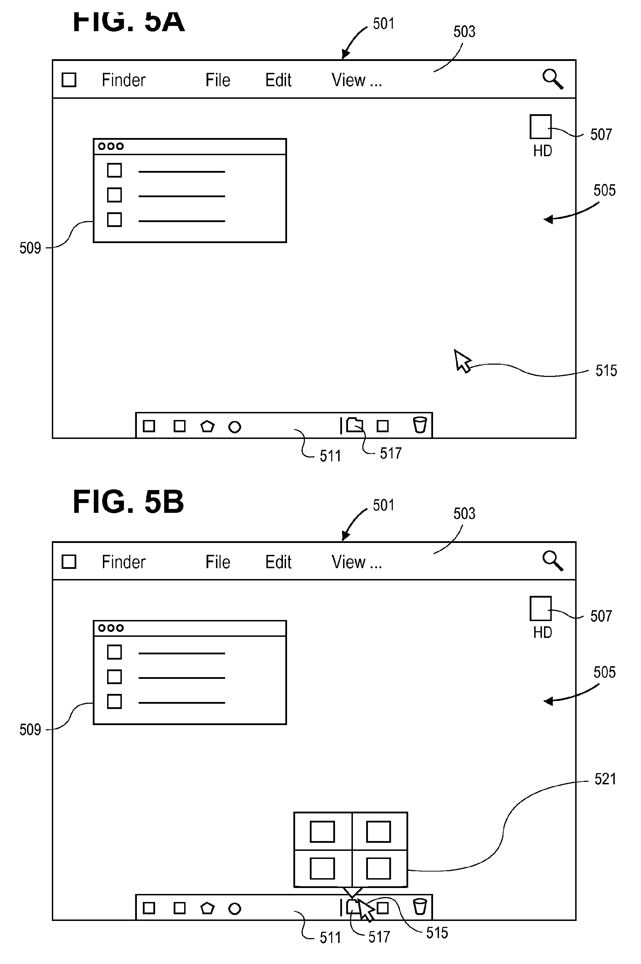

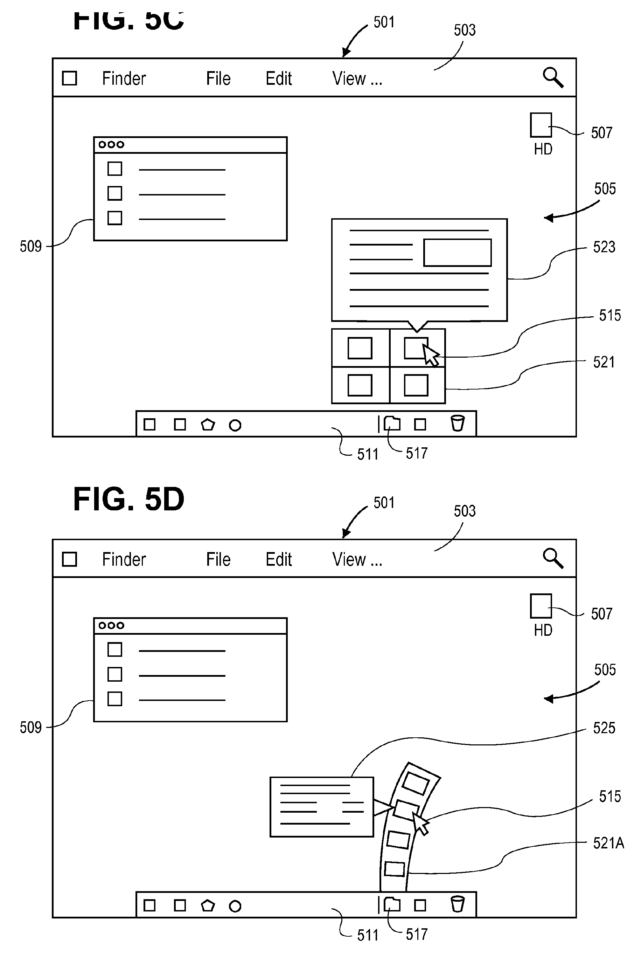

**Figures 5A, 5B****,** **5C**, and **5D** provide an example of how previews, which can be interactable, can be provided for documents or files accessible from a dock or other program control region disposed on an edge of a display screen. In one embodiment, a method for allowing the presentation of these previews can include receiving a selection of an icon in a dock or other program control region which is disposed on an edge of a display screen. The icon can represent a folder or a collection of documents assembled by, for example, the user for easy access by accessing the icon on the dock. As shown in **Figure 5A****,** the icon can resemble a folder such as folder 517 in dock 511 displayed on desktop 505. Folder icon 517 may be selected by positioning cursor 515 over folder icon 517 and the user presses a button, such as a mouse's button, to cause the presentation of a content viewer 521 shown in **Figure 5B****.** The user interface can also include desktop 505 as well as storage icon 507 in window 509, all displayed on display screen 501 along with menu bar 503. The user can then present a preview of any one of the items within content viewer 521 by positioning, in one embodiment, the cursor to select one of the files or objects within content viewer 521. In one embodiment, each item within content viewer 521 is a file that has been caused by the user to be accessible from folder icon 517 through the presentation of content viewer 521. The user can, as shown in **Figure 5C****,** position a cursor 515 over one of the items in content viewer 521, to cause the presentation of a preview of the content in preview panel 523 of the selected file or document. In the example shown in **Figure 5C****,** the user has selected one of the four files or documents from content viewer 521 to cause the presentation of the content of the selected file within preview panel 523. In one embodiment, the preview panel can optionally include page controls or scroll controls or playback controls or other controls activatable by a user to allow the user to interact with the preview presented within the preview panel while the content viewer 521 is also displayed.

**Figure 5D** shows another example of a content viewer in the form of a stack. Content viewer 521A is also user selectable as shown in **Figure 5D** by, in this example, positioning cursor 515 over one of the items to cause the presentation of the preview panel 525. In one embodiment, the preview panel 525 can include a pointer which points to the selected file and which is displayed with the preview panel and the content viewer 521A concurrently.

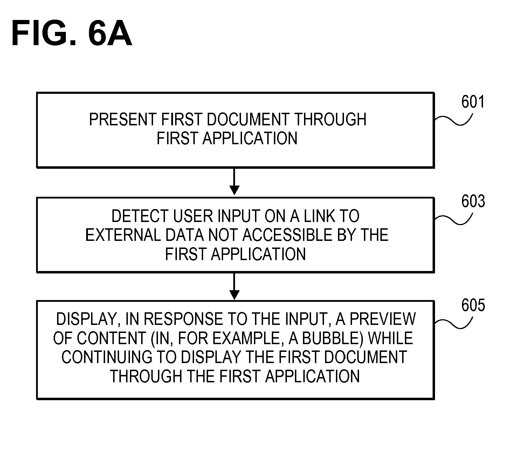

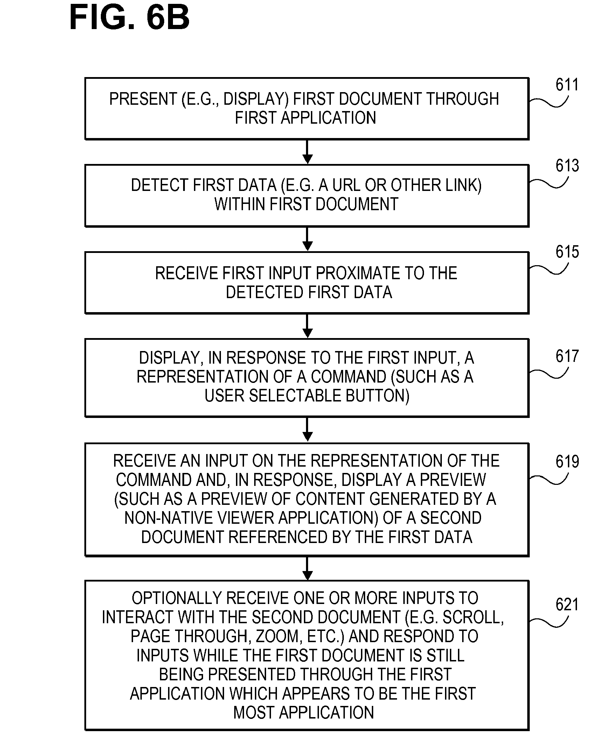

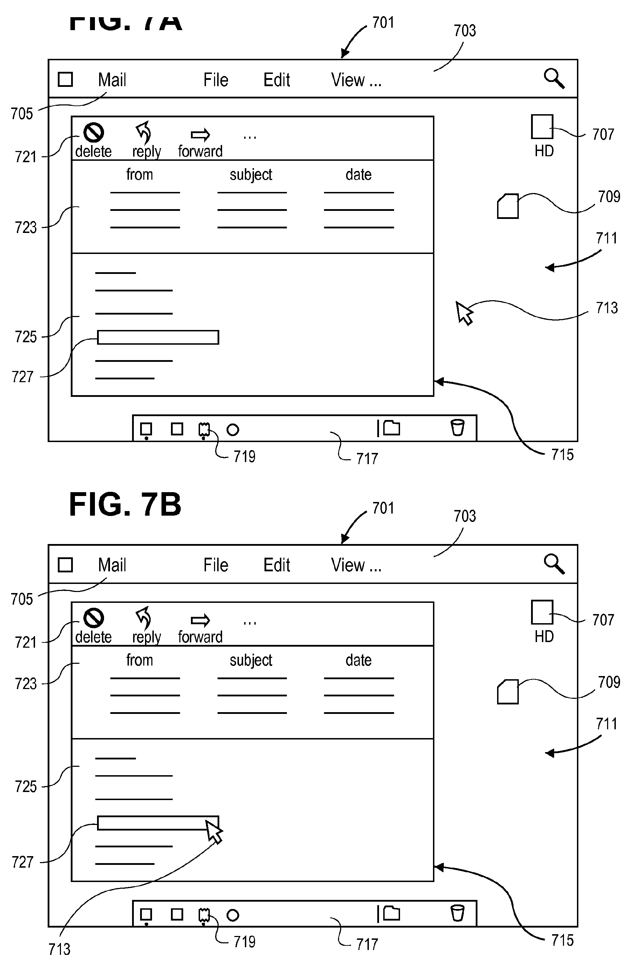

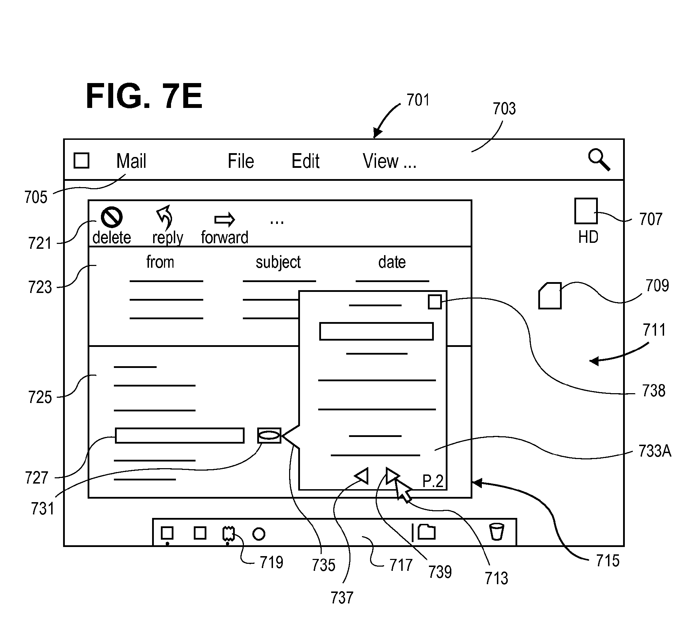

**Figure 6A** shows an example of a method according to one embodiment for concurrently presenting a preview of content referred to by a link in a first document which is presented through a first application. In one embodiment, the content of the preview can be presented by a non-native application viewer which is different than the first application and which has been described herein. In operation 601, the method can begin by presenting a first document through a first application. For example, the first document can be an email being presented through an email application, such as Microsoft Outlook or Microsoft Entourage or Apple's Mail email program. The email can contain a link, such as a URL to a website, within the email. In operation 603, the system can detect an input on the link. The link can be to external data that is not accessible by the first application. In the prior art, the user could select the link by "clicking" on the link to cause a web browser to be launched to display the web page; in this case, the launched web browser becomes the front most window and has the keyboard focus. With an embodiment of the present invention, the user need not exit the email program to see the web page but rather can cause a preview of the web page to be presented concurrently with the email. An example of a user interface of this example is provided in conjunction with **Figures 7A-7E** which are described further below. The user input detected in operation 603 may be, in one embodiment, the hovering of a cursor over the link or the gesture of one or more of the user's fingers relative to the link or the selection of a "display preview" command from a pop-up menu or a pull-down menu, etc. In response to this input from operation 603, the system displays, in operation 605, a preview of the content in, for example, a bubble while continuing to display the first document through the first application. In one embodiment, the first application still remains the front most application and the preview can be provided by a second application which can be a non-native reader or viewer application which can generate previews such as the preview generator described in conjunction with **Figure 8** herein. In one embodiment, the first application can be configured to create or edit the first document (e.g. the email program is configured to create or edit emails and to cause the emails to be sent) while the non-native application which generates the previews cannot create or edit the emails. In one embodiment, the preview can be user interactable to allow the user to perform at least one of scrolling through content of the external data or paging through the content of the external data or zooming in or out of the content of the external data or playing a movie if the external data is a movie, etc. In one embodiment, the preview can be displayed in a bubble which is adjacent to the link and which indicates the relationship of the bubble to the link such as, for example, the bubble points to the link with a pointer. The embodiment of the method shown in **Figure 6A** can also optionally include a data detection operation (such as operation 613 of **Figure 6B****),** and this data detection operation can be used to determine buttons or other user interface (UI) elements to be presented with the preview (e.g. buttons in a preview in a bubble), and these buttons or other UI elements can be user interactable to allow a user to cause an action associated with a user selected button or other UI element. For example, if the data detection operation detects that the preview displayed in the bubble is a calendar, the data detection operation can (in one embodiment) cause the preview generator to also present two user selectable buttons, one for creating a new calendar event or entry and another for editing an existing calendar event or entry, and if a user selects one of these user selectable buttons the system can respond to the user selection by launching the appropriate native application (such as a calendar application in this example) to allow the user to create a new calendar event or edit an existing one from within the launched appropriate native application. User selectable button 738 (shown in the preview panel that shows content 733A in **Figure 7E**) is an example of a user selectable button generated as a result of a data detection operation described herein, and a user selection of this user selectable button can cause, in one embodiment, a native application to be launched to perform or begin the action specified by the user selectable button.

In one embodiment, the user input in operation 603 is a first input which causes the presentation of the preview, and this first input is different than a second input which can cause the opening of a display region controlled by a second application program that is configured to natively present the content of the external data. In the example given above of the email program which includes a link that refers to a web page, the second program would be a web browser while the first program would be the email program that contained the link to the web page displayed by the web browser.

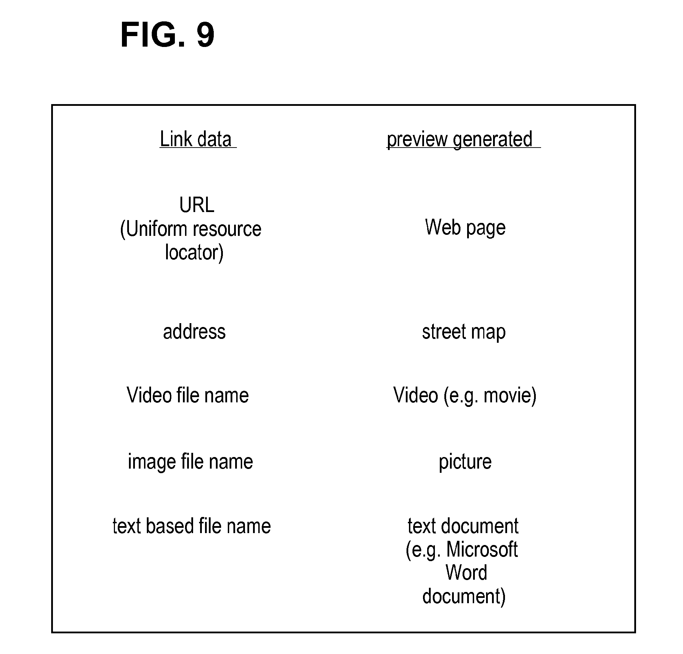

**Figure 6B** shows an example of another method according to an embodiment of the present invention for presenting a preview in the context of a document containing a link or other data identifying the content which can be previewed. The method shown in **Figure 6B** can begin in operation 611 in which a first document is presented through a first application. The first document could be an email presented through an email program or a text document presented through Microsoft Word or other word processing programs. In operation 613, the system can detect first data within the first document. This operation could be performed prior to the presentation of the document in operation 611 or after the presentation of the document in operation 611. The first data could be a URL (Uniform Resource Locator) or other link or pointer to external data which, in one embodiment, is not accessible to the first application. For example, a link to a web page in an email is normally not accessible to an email program or to a word processing program or to a spreadsheet program, etc. In operation 615, the system can receive a first input which can be proximate to the detected data. In one embodiment, the detection of the first data can occur when the input is received. In other words, if the input is hovering a cursor over the data the user believes is a link or making a gesture with a finger or set of fingers over what the user believes is a link, the system could use the data detector techniques described herein to determine whether the first data is a link and the data type of the link to external data or to a second document. In this embodiment, the detection of the first data is done on an on-demand basis (for example, data detectors 809 in **Figure 8** are called through an API to detect the data type of the link in response to the hovering input over the link). In operation 617, an optional representation of a command, such as a user selectable button (e.g. preview button 731), can be displayed in response to the first input. Alternatively, the system can use the first input to cause the presentation of the preview without requiring the user to interact with the command, such as a user selectable button displayed in operation 617. In the embodiment which uses the display of a representation of the command from operation 617, then the system can receive an input in operation 619 on the command and cause the display of a preview or presentation of the preview, such as a preview of the content generated by a non-native viewer application such as the preview generator described in conjunction with **Figure 8****.** The content can be of a second document referenced by the first data as described herein. For example, the content can be a web page referenced by the URL which is the first data detected in operation 613, or the second document can be a map of a location identified by a street address detected as the first data in operation 613, etc. The second document can be any one of the documents identified as a preview generated in the table shown in **Figure 9****.** It will be understood that the table of **Figure 9** is not intended to be an exhaustive list of the different types of previews that can be generated, and further that the list of link data is not intended to be an exhaustive list of the different types of links which can be detected within the first document according to the method of **Figure 6B****.**

The method of **Figure 6B** can include an optional operation, which is operation 621, which can allow a user to interact with the second document. This interaction can include scrolling through the second document, paging through the second document, zooming in or zooming out through the second document, playing a movie within the second document, etc. The system can respond to user inputs to cause the interaction while the first document is still being presented through the first application. In one embodiment, the first application can remain as the front most application while the preview, which can be user interactable, is displayed concurrently with the first document. Moreover, the second document can be presented with one or more user selectable UI elements (e.g. buttons) to allow a user to, in response to selecting one or more of the UI elements, cause an action from the preview. The action, in the example given above, can be the launching of a calendar application which then creates a new calendar event or entry. The preview generator can, in response to a selection of such a UI element, pass data to the native application to specify commands or data or both for the native application to process. For example, if the calendar event in the preview is on a certain date and the user selects the "Create New Event" button in the preview, the preview generator can pass both the command to create a new event and that certain date to the calendar application which can be launched in response to the selection of the button and then present a newly created event on that date (and be ready to receive user inputs to edit that event). The UI elements can be determined by the data detectors which can, based on the detected data types in the preview, select the most appropriate actions for the detected data types. For example, if the data detectors detect a map in the preview, then the data detectors can specify that the user selectable UI elements include one or more of: a "Create New Contact" button and a "Add New Contact" button and an "Open in Web Browser" button.

In one embodiment, the detection of the first data in operation 613 is performed by an application which is different than the first application and which is also different from the preview generator which generates the preview in operation 619. In one embodiment, the preview presented in operation 619 occurs concurrently with the presentation of the first document in a first window by the first application, and the first application can remain the front most application such that it is configured to have the keyboard focus or other focus from the system. The types of data detected in operation 613 can be any one, in one embodiment, of the data or links indicated in **Figure 9****,** including, for example, URLs, etc. In one embodiment, the preview presented in operation 619 can be displayed in a bubble that overlaps with the first window that displays the first document. In one embodiment, one or more user selectable commands (such as buttons or other UI elements) can also be displayed in the bubble to allow a user to invoke a response from a user interaction with a user selectable command. In one embodiment which utilizes the display of the representation of the command from operation 617, it will be appreciated that the representation of the command (such as preview button 731) is not part of the first document and appears in response to receiving the first input. The first input is configured, in one embodiment, to cause the presentation of the representation of the command which can, in turn, when activated, cause the presentation of the preview. However, as noted above, the first input itself can cause the presentation of the preview when operation 617 is optional. If the first data is a link which has already been configured to allow the launching of a second application which is different than the first application, then the first input can be different than a second input which causes the launching of the second application to present the data pointed to by the link, such as the web page given in the example of the email of **Figures 7A-7E****.** In such case, when the second application is launched, it will become the front most window relative to the first application, whereas when the preview is presented, the first application remains the front most window so the user can see the preview without losing the context of the first document in the first application and while maintaining the first application as the front most application to be able to receive keyboard inputs, mouse inputs, etc.

**Figures 7A-7E** shows an example of a user interface which can implement one or more of the methods described in connection with either **Figure 6A** or **Figure 6B****.** The user interface can include a display screen 701 which can be, in one embodiment, a liquid crystal display device which presents the user interface which includes menu bar 703, desktop 711, dock 717, and email window 715. Email window 715 can be presented by an email program such as the mail program from Apple Inc. of Cupertino, California; this mail program is shown as the front most application by its presence (the name "Mail") in the program menu 705 in menu bar 703. The email program presents email window 715 which can include a conventional tool bar 721 which displays one or more icons representing commands to process emails, such as replying to emails, forwarding emails, sending new emails or creating new emails, deleting emails, etc. The email program can also generate and display within email window 715 a preview pane 723 which displays previews of one or more emails as is known in the art. Email window 715 can also display the content of a selected email, such as email content 725 shown below preview pane 723.

The user interface can also include one or more icons in dock 717 such as email icon 719 indicating that the email program is executing; the dock is an example of a program control region disposed at an edge of a display screen, and such program control regions can be used to control launching or quitting or other operations for one or more application programs which can execute on a data processing system. The user interface can also include storage icon 707 which can represent a hard drive or other storage system coupled to the data processing system and also include one more icons on the desktop, such as icon 709 which represents a file accessible to the data processing system. The user interface can, in one embodiment, include a cursor 713 which can be used, in a conventional manner, to control the user interface through the use of a mouse or other cursor control device. In other embodiments, such as touch screen or touch pad embodiments, the cursor may or may not be present and inputs can be applied by finger or stylus touches on a touch sensitive surface, such as a touch screen or a touch pad.

In the example shown in **Figure 7A****,** email content 725 includes link 727 which can, in one embodiment, refer to external data which is not accessible to the email application. For example, the link could refer to a web page which requires a web browser to display the web page. **Figure 9****,** under the column "link data", provides examples of the types of links which can be present within a first document, such as email content 725. In one embodiment, the links are detected using data detectors described in conjunction with **Figure 8****;** in another embodiment, the links are already identified by the first document, such as email content 725, to indicate the nature or type of the link, such as a URL for a web page. When the link is already identified, selecting the link in the prior art will cause the launching of a web browser to display the web page when the link is a URL for the web page; however, this distracts the user from the content of the first document, such as email content 725, because the web browser launches and presents a window on top of the first document in the prior art. At least certain embodiments of the present invention can avoid that distraction and allow the user's focus to remain on the first document, such as email content 725, by presenting a preview panel without launching the native application which can process the content referred to by the link, such as link 727.

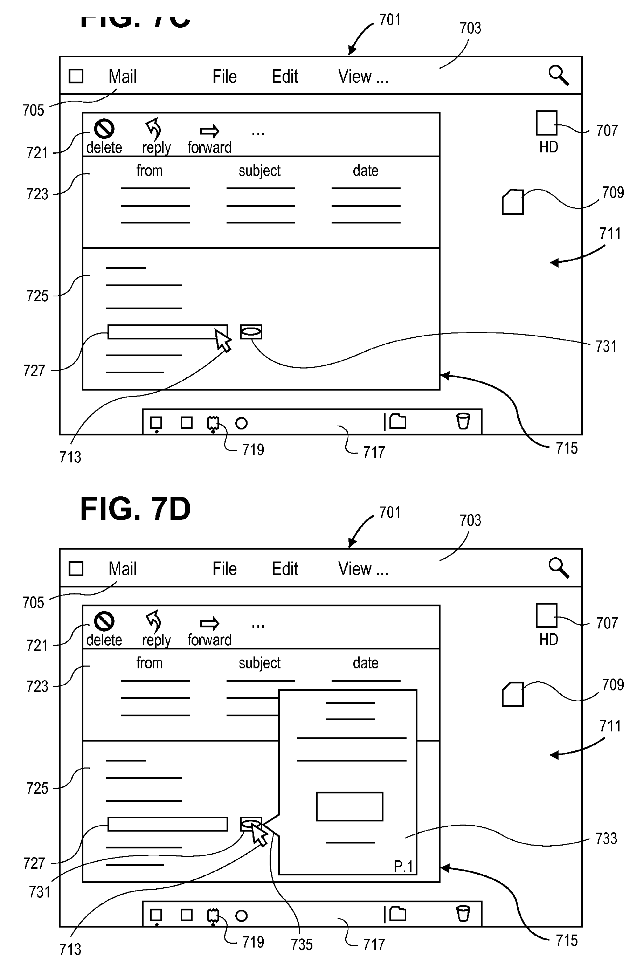

The user can select link 727 by, for example, positioning cursor 713 proximate to (e.g. over) link 727; in other embodiments, the link could be selected for preview mode by a predetermined gesture with one or more of the user's fingers to cause a display of a preview panel directly or to cause a display of a command which, when selected, can cause the display of the preview panel. In one embodiment, the user hovers cursor 713 over the link which causes the system, after a period of time that the cursor has been hovered over link 727, to present an optional preview button 731 as shown in **Figure 7C****.** The user can then select preview button 731, which has been overlaid on email content 725, to cause the presentation of a preview panel shown in **Figure 7D** which displays content 733 of the document referred to by link 727. In one embodiment, this document is the second document referred to in the method of **Figure 6B****.** In one embodiment, the content of the second document is not accessible to the first application, which in this case is the email application that is presenting email window 715. The preview panel shown in **Figure 7D** can include a pointer 735 which indicates the link that referred to the content displayed within the preview panel shown in **Figure 7D****.**

Preview button 731 is optional in certain embodiments and may not be displayed, and in this case, the input received by, for example, hovering cursor 713 over link 727 will skip the user interface shown in **Figure 7C** and go directly to the interface shown in **Figure 7D** in which the preview panel is displayed showing the content of the document referred to by link 727, and no preview button (such as preview button 731) will be displayed in the user interface in this sequence for this embodiment.

The preview presented within the preview panel shown in **Figure 7D** can be user interactable in that the user may be able to page through the content that is being previewed or scroll through the content, or zoom in or zoom out through the content, or play a movie if the content is a movie, etc. An example of a preview which is user interactable is shown in **Figure 7E** in which the preview shown in **Figure 7D** now includes back button 737 and forward button 739 which can be selected by a user by hovering cursor 713 over either one of the buttons to page through the various pages of the content displayed within the preview panel that shows content 733A. Hence, the user interface shown in **Figure 7E** can be used to implement operation 621 described above in connection with **Figure 6B****.** In addition, the preview panel that shows content 733A can include one or more user selectable UI elements (such as user selectable button 738) that are determined from the detected data types in the content, and these UI elements, when selected, can cause an action as described herein (e.g. create a new calendar event or create a new contact, etc.).

**Figure 8** shows an example of a software architecture which can implement one or more of the methods described in conjunction with **Figures 6A** or **6B****.** Software architecture 801 can include a preview generator 803 which can include a set of software routines configured to generate previews of a variety of different types of files including, word processing files, spreadsheet files, PowerPoint files, presentation files, PDF files, picture or image files, HTML files, web pages, streaming media, etc. Often, each routine in the set is configured to present one of the types of files such that one routine can present one type of file and another routine can present another type of file. In this case, the preview generator needs to determine the type of file (or data type) to select the proper routine, and the data detectors 809 can provide an identification of the type of file (or data type) to the preview generator to allow it to select the proper routine. This architecture may include one or more APIs to act as an interface between preview generator 803 and data detectors 809 and other components of the system. For example, one or more application programs, such as the email program shown in **Figure 7A****,** can make calls to preview generator 803 in order to have a preview generated for a file. Data detectors 809 can be, in one embodiment, a set of software routines configured to detect various different types of data, such as URLs or the other types of links shown in **Figure 9** under the column "link data." In one embodiment, the data detectors can be known data detectors such as those described in U.S. patents 5,390,281; 5,864,789; and 5,946,647; and also described in pending U.S. application publications 2008/0243841; 2010/0121631; and 2009/0306964. These data detectors can process the content, such as email content 725, to determine the existence of a link if the link is not already flagged or identified in the content. Using the example of **Figure 7A****,** the first document content can be considered to be email content 725 which includes link 727 which points to content of a second document which can be a web page. Continuing with this example, the first application 805 would be the email program shown in **Figure 7A** and the second application 807 would be a web browser which is configured to render the content 813 of the second document. Preview generator 803 can, in conjunction with data detectors 809, identify the type of the link and then use the link to display a preview of content 813 without launching or invoking the second application 807 and while still maintaining first application 805 as the front most application, as in the example shown in **Figures 7D** and **7E****.** Moreover, the data detectors can determine the types of actions that can be performed with the content and can present user selectable UI elements to allow a user to invoke those actions as described herein.

In one embodiment, the preview bubble or panel or window can be configured to allow the selection of a portion of or all of the text or other objects within the preview, and then allow a copying or dragging or moving operation, of the selection, to another file or document. For example, in one embodiment, a user can select text (or other object) from within a preview and then can signal to the system (e.g. through a button or a gesture or cursor movement) that the selected text (or other object) is to be dropped into an existing file or window or a new file is to be created. In one example, a user can select text from within a preview and then drag the text with a finger or stylus or cursor into another window or onto an icon representing an application (e.g. an email application) and this causes the system to paste the text into the another window or open a window controlled by the application (e.g. the email application) and deposit the text into that window. Moreover, the action or response by the native application can be dictated by the context or content of the preview. For example, if the selected text is an email address, then the native email application, in response to the drag and drop operation, can create and open a new email that is addressed to that address whereas if the selected text is content (e.g. text to be used in the email message), rather than an address, then the native email application, in response to the drag and drop operation, can create and open a new email that includes the content.

Some embodiments include one or more application programming interfaces (APIs) in an environment with calling program code interacting with other program code being called through the one or more interfaces. Various function calls, messages or other types of invocations, which further may include various kinds of parameters, can be transferred via the APIs between the calling program and the code being called. In addition, an API may provide the calling program code the ability to use data types or classes defined in the API and implemented in the called program code.

At least certain embodiments include an environment with a calling software component interacting with a called software component through an API. A method for operating through an API in this environment includes transferring one or more function calls, messages, other types of invocations or parameters via the API.

One or more Application Programming Interfaces (APIs) may be used in some embodiments. An API is an interface implemented by a program code component or hardware component (hereinafter "API-implementing component") that allows a different program code component or hardware component (hereinafter "API-calling component") to access and use one or more functions, methods, procedures, data structures, classes, and/or other services provided by the API-implementing component. An API can define one or more parameters that are passed between the API-calling component and the API-implementing component.

An API allows a developer of an API-calling component (which may be a third party developer) to leverage specified features provided by an API-implementing component. There may be one API-calling component or there may be more than one such component. An API can be a source code interface that a computer system or program library provides in order to support requests for services from an application. An operating system (OS) can have multiple APIs to allow applications running on the OS to call one or more of those APIs, and a service (such as a program library) can have multiple APIs to allow an application that uses the service to call one or more of those APIs. An API can be specified in terms of a programming language that can be interpreted or compiled when an application is built.

In some embodiments the API-implementing component may provide more than one API, each providing a different view of or with different aspects that access different aspects of the functionality implemented by the API-implementing component. For example, one API of an API-implementing component can provide a first set of functions and can be exposed to third party developers, and another API of the API-implementing component can be hidden (not exposed) and provide a subset of the first set of functions and also provide another set of functions, such as testing or debugging functions which are not in the first set of functions. In other embodiments the API-implementing component may itself call one or more other components via an underlying API and thus be both an API-calling component and an API-implementing component.

An API defines the language and parameters that API-calling components use when accessing and using specified features of the API-implementing component. For example, an API-calling component accesses the specified features of the API-implementing component through one or more API calls or invocations (embodied for example by function or method calls) exposed by the API and passes data and control information using parameters via the API calls or invocations. The API-implementing component may return a value through the API in response to an API call from an API-calling component. While the API defines the syntax and result of an API call (e.g., how to invoke the API call and what the API call does), the API may not reveal how the API call accomplishes the function specified by the API call. Various API calls are transferred via the one or more application programming interfaces between the calling (API-calling component) and an API-implementing component. Transferring the API calls may include issuing, initiating, invoking, calling, receiving, returning, or responding to the function calls or messages; in other words, transferring can describe actions by either of the API-calling component or the API-implementing component. The function calls or other invocations of the API may send or receive one or more parameters through a parameter list or other structure. A parameter can be a constant, key, data structure, object, object class, variable, data type, pointer, array, list or a pointer to a function or method or another way to reference a data or other item to be passed via the API.

Furthermore, data types or classes may be provided by the API and implemented by the API-implementing component. Thus, the API-calling component may declare variables, use pointers to, use or instantiate constant values of such types or classes by using definitions provided in the API.

Generally, an API can be used to access a service or data provided by the API-implementing component or to initiate performance of an operation or computation provided by the API-implementing component. By way of example, the API-implementing component and the API-calling component may each be any one of an operating system, a library, a device driver, an API, an application program, or other module (it should be understood that the API-implementing component and the API-calling component may be the same or different type of module from each other). API-implementing components may in some cases be embodied at least in part in firmware, microcode, or other hardware logic. In some embodiments, an API may allow a client program to use the services provided by a Software Development Kit (SDK) library. In other embodiments an application or other client program may use an API provided by an Application Framework. In these embodiments the application or client program may incorporate calls to functions or methods provided by the SDK and provided by the API or use data types or objects defined in the SDK and provided by the API. An Application Framework may in these embodiments provide a main event loop for a program that responds to various events defined by the Framework. The API allows the application to specify the events and the responses to the events using the Application Framework. In some implementations, an API call can report to an application the capabilities or state of a hardware device, including those related to aspects such as input capabilities and state, output capabilities and state, processing capability, power state, storage capacity and state, communications capability, etc., and the API may be implemented in part by firmware, microcode, or other low level logic that executes in part on the hardware component.

The API-calling component may be a local component (i.e., on the same data processing system as the API-implementing component) or a remote component (i.e., on a different data processing system from the API-implementing component) that communicates with the API-implementing component through the API over a network. It should be understood that an API-implementing component may also act as an API-calling component (i.e., it may make API calls to an API exposed by a different API-implementing component) and an API-calling component may also act as an API-implementing component by implementing an API that is exposed to a different API-calling component.

The API may allow multiple API-calling components written in different programming languages to communicate with the API-implementing component (thus the API may include features for translating calls and returns between the API-implementing component and the API-calling component); however the API may be implemented in terms of a specific programming language. An API-calling component can, in one embedment, call APIs from different providers such as a set of APIs from an OS provider and another set of APIs from a plug-in provider and another set of APIs from another provider (e.g. the provider of a software library) or creator of the another set of APIs.

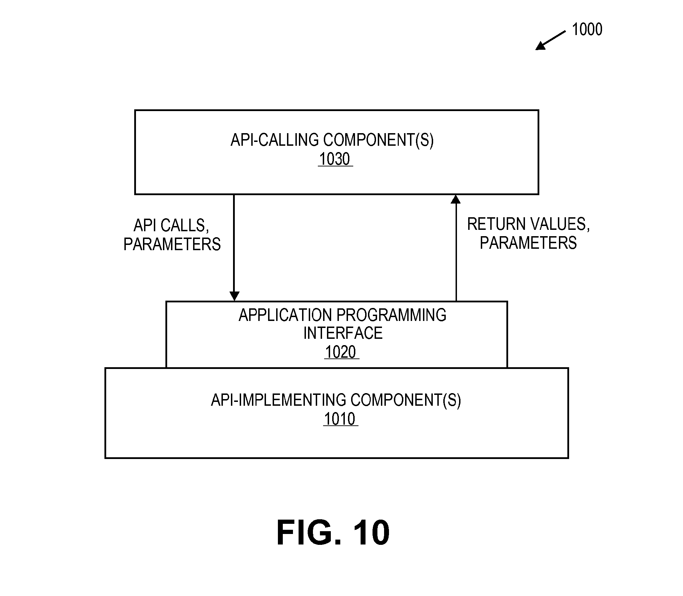

**Figure 10** is a block diagram illustrating an exemplary API architecture, which may be used in some embodiments of the invention. As shown in **Figure 10****,** the API architecture 1000 includes the API-implementing component 1010 (e.g., an operating system, a library, a device driver, an API, an application program, software or other module) that implements the API 1020. The API 1020 specifies one or more functions, methods, classes, objects, protocols, data structures, formats and/or other features of the API-implementing component that may be used by the API-calling component 1030. The API 1020 can specify at least one calling convention that specifies how a function in the API-implementing component receives parameters from the API-calling component and how the function returns a result to the API-calling component. The API-calling component 1030 (e.g., an operating system, a library, a device driver, an API, an application program, software or other module), makes API calls through the API 1020 to access and use the features of the API-implementing component 1010 that are specified by the API 1020. The API-implementing component 1010 may return a value through the API 1020 to the API-calling component 1030 in response to an API call.

It will be appreciated that the API-implementing component 1010 may include additional functions, methods, classes, data structures, and/or other features that are not specified through the API 1020 and are not available to the API-calling component 1030. It should be understood that the API-calling component 1030 may be on the same system as the API-implementing component 1010 or may be located remotely and accesses the API-implementing component 1010 using the API 1020 over a network. While **Figure 10** illustrates a single API-calling component 1030 interacting with the API 1020, it should be understood that other API-calling components, which may be written in different languages (or the same language) than the API-calling component 1030, may use the API 1020.

The API-implementing component 1010, the API 1020, and the API-calling component 1030 may be stored in a tangible machine-readable storage medium, which includes any mechanism for storing information in a form readable by a machine (e.g., a computer or other data processing system). For example, a tangible machine-readable storage medium includes magnetic disks, optical disks, random access memory (e.g. DRAM); read only memory, flash memory devices, etc.

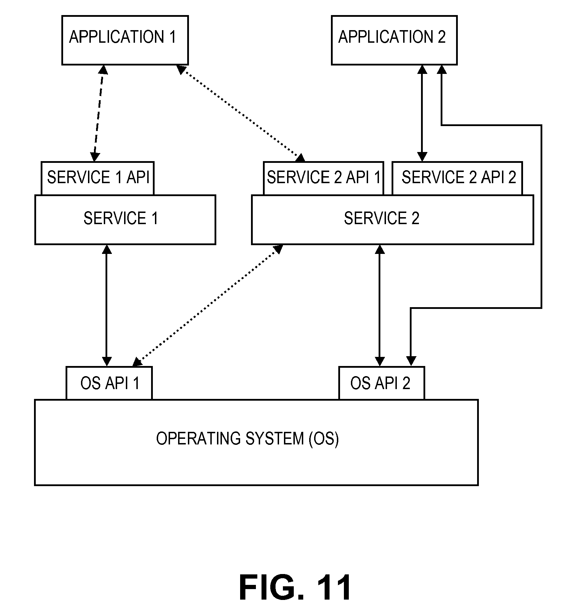

In **Figure 11** ("Software Stack"), an exemplary embodiment, applications can make calls to Services A or B using several Service APIs and to Operating System (OS) using several OS APIs. Services A and B can make calls to OS using several OS APIs.

Note that the Service 2 has two APIs, one of which (Service 2 API 1) receives calls from and returns values to Application 1 and the other (Service 2 API 2) receives calls from and returns values to Application 2. Service 1 (which can be, for example, a software library) makes calls to and receives returned values from OS API 1, and Service 2 (which can be, for example, a software library) makes calls to and receives returned values from both OS API 1 and OS API 2. Application 2 makes calls to and receives returned values from OS API 2.

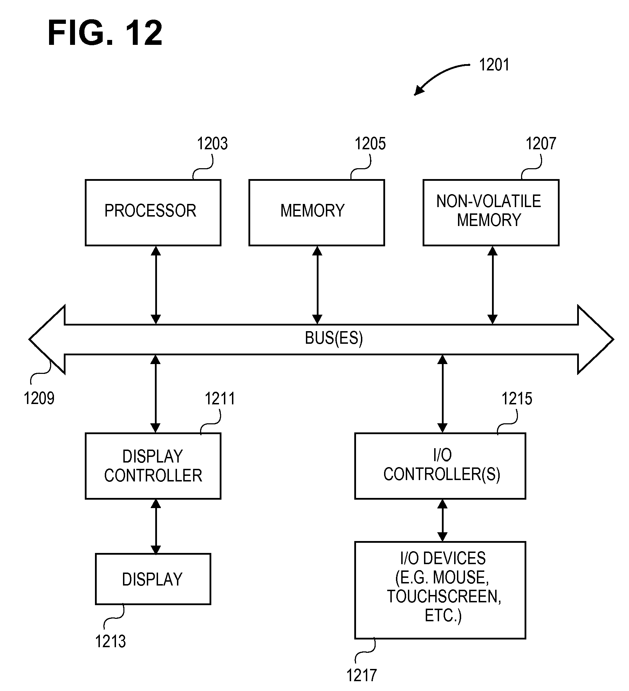

Any one of the methods described herein can be implemented on a variety of different data processing devices, including general purpose computer systems, special purpose computer systems, etc. For example, the data processing systems which may use any one of the methods described herein may include a desktop computer or a laptop computer or a tablet computer or a smart phone, or a cellular telephone, or a personal digital assistant (PDA), an embedded electronic device or a consumer electronic device. **Figure 12** shows one example of a typical data processing system which may be used with the present invention. Note that while **Figure 12** illustrates the various components of a data processing system, such as a computer system, it is not intended to represent any particular architecture or manner of interconnecting the components as such details are not germane to the present invention. It will also be appreciated that other types of data processing systems which have fewer components than shown or more components than shown in **Figure 12** may also be used with the present invention. The data processing system of **Figure 12** may be a Macintosh computer from Apple Inc. of Cupertino, California. As shown in **Figure 12****,** the data processing system 1201 includes one or more buses 1209 which serve to interconnect the various components of the system. One or more processors 1203 are coupled to the one or more buses 1209 as is known in the art. Memory 1205 may be DRAM or non-volatile RAM or may be flash memory or other types of memory. This memory is coupled to the one or more buses 1209 using techniques known in the art. The data processing system 1201 can also include non-volatile memory 1207 which may be a hard disk drive or a flash memory or a magnetic optical drive or magnetic memory or an optical drive or other types of memory systems which maintain data even after power is removed from the system. The non-volatile memory 1207 and the memory 1205 are both coupled to the one or more buses 1209 using known interfaces and connection techniques. A display controller 1211 is coupled to the one or more buses 1209 in order to receive display data to be displayed on a display device 1213 which can display any one of the user interface features or embodiments described herein. The display device 1213 can include an integrated touch input to provide a touch screen. The data processing system 1201 can also include one or more input/output (I/O) controllers 1215 which provide interfaces for one or more I/O devices, such as one or more mice, touch screens, touch pads, joysticks, and other input devices including those known in the art and output devices (e.g. speakers). The input/output devices 1217 are coupled through one or more I/O controllers 1215 as is known in the art. While **Figure 12** shows that the non-volatile memory 1207 and the memory 1205 are coupled to the one or more buses directly rather than through a network interface, it will be appreciated that the data processing system may utilize a non-volatile memory which is remote from the system, such as a network storage device which is coupled to the data processing system through a network interface such as a modem or Ethernet interface or wireless interface, such as a wireless WiFi transceiver or a wireless cellular telephone transceiver or a combination of such transceivers. As is known in the art, the one or more buses 1209 may include one or more bridges or controllers or adapters to interconnect between various buses. In one embodiment, the I/O controller 1215 includes a USB adapter for controlling USB peripherals and can control an Ethernet port or a wireless transceiver or combination of wireless transceivers. It will be apparent from this description that aspects of the present invention may be embodied, at least in part, in software. That is, the techniques and methods described herein may be carried out in a data processing system in response to its processor executing a sequence of instructions contained in a tangible, non-transitory memory such as the memory 1205 or the non-volatile memory 1207 or a combination of such memories, and each of these memories is a form of a machine readable, tangible storage medium. In various embodiments, hardwired circuitry may be used in combination with software instructions to implement the present invention. Thus the techniques are not limited to any specific combination of hardware circuitry and software nor to any particular source for the instructions executed by the data processing system.

In the foregoing specification, the invention has been described with reference to specific exemplary embodiments thereof. It will be evident that various modifications may be made thereto without departing from the broader scope of the invention as set forth in the following claims. The specification and drawings are, accordingly, to be regarded in an illustrative sense rather than a restrictive sense.

## Claims

1. A machine implemented method comprising:
presenting a first document through a first application;
detecting a plurality of references within the first document, the plurality of references referencing a respective plurality of second documents;
determining a first reference from the plurality of references that is likely to be selected for a preview by a user based upon a user activity with the presented first document;
preprocessing content in the second document referenced by the first reference by creating a content preview;
presenting, in response to receiving a first input proximate to a representation of the first reference displayed in the first document, a user interface element;
presenting, in response to receiving an input on the user interface element, the created content preview while continuing to present the first document.

2. The method of claim 1, wherein presenting the first document includes displaying the first document in a first window, and wherein detecting the plurality of references is performed by a second application that is configured to detect at least one of: a URL (Uniform Resource Locator), a street address, a phone number, an email address, an ISBN number and an image file name, and wherein the preview is created by a nonnative reader application that is different than the first application which is configured to create and edit the first document.

3. The method of claim 2, wherein the preview is configured to receive and process user input.

4. The method of any one of claims 1-3, wherein presenting the first document through the first application includes displaying the first document in a first window and wherein the presenting the preview includes presenting the preview in a bubble that is overlaid on top of the first window.

5. The method of claim 4, wherein the preview is created by a non-native reader application that is different than the first application which is configured to create and edit the first document, and wherein the non-native reader application cannot edit or create the first document.

6. The method of claim 5, wherein responsive to detecting a second input on the reference the method further comprises opening of a display region controlled by a second application, the second application being configured to natively present the content referenced by the first data and being different than the first application.

7. The method of claim 4, wherein presenting the preview includes receiving a second input to cause at least one of: (a) scrolling in the preview, (b) zooming in the preview, (c) paging through the preview, and (d) playing a movie in the preview, and wherein the first input is one of (i) hovering a cursor, controlled by a cursor control device, proximate to the reference, or (ii) a first touch gesture, and wherein the input on the user interface element is one of (I) pressing a button while hovering the cursor proximate to the reference or (II) a second touch gesture.

8. A machine-readable medium comprising instructions, which when performed by the machine, causes the machine to perform the operations of any one of claims 1-7.

9. A system comprising:
a first application configured to present a first document;
a data detector configured to:
detect a plurality of references within the first document, the plurality of references referencing a respective plurality of second documents; and
determine a first reference from the plurality of references that is likely to be selected for a preview by a user based upon a user activity with the presented first document;
a preview generator configured to:
preprocess content in the second document referenced by the first reference by creating a content preview; and
present, in response to receiving a first input proximate to a representation of the first reference displayed in the first document, a user interface element; and
present, in response to receiving an input on the user interface element, the created content preview while continuing to present the first document.

10. The system of claim 9, wherein the first application is configured to present the first document in a first window, and wherein the data detector is configured to detect at least one of: a URL (Uniform Resource Locator), a street address, a phone number, an email address, an ISBN number and an image file name, and wherein the preview generator is configured to create the preview using a nonnative reader application that is different than the first application which is configured to create and edit the first document.

11. The system of claim 10, wherein the data detector detects the plurality of references within the first document before receiving the first input and wherein the preview generator is configured to generate a preview that allows user interaction with the preview, and wherein the non-native reader application cannot edit or create the first document.

12. The system of any one of claims 9-11, wherein the first application is configured to present the first document in a first window and wherein the preview generator is configured to present the preview by displaying the preview in a bubble that is overlaid on top of the first window.

13. The system of claim 12, wherein the preview generator is configured to create the preview using a non-native reader application that is different than the first application which is configured to create and edit the first document, and wherein the non-native reader application cannot edit or create the first document.

14. The system of claim 13, wherein the first application is configured to display a link representing one of the plurality of references, and wherein the data detector is configured to detect a second input on the link and in response to detecting a second input on the link, the data detector is configured to open a display region controlled by a second application, the second application being configured to natively present the content referenced by the first reference and being different than the first application.

15. The system of claim 12, wherein the preview generator is configured to receive a second input to cause one of: (a) scroll in the preview, (b) zoom in the preview, (c) page through the preview, and (d) play a movie in the preview, and wherein the first input is one of (i) hovering a cursor, controlled by a cursor control device, proximate to the first reference, or (ii) a first touch gesture, and wherein the input on the user interface element is one of (I) pressing a button while hovering the cursor proximate to the first reference or (II) a second touch gesture.

## Patentansprüche

1. Maschinenimplementiertes Verfahren, umfassend:
Darstellen eines ersten Dokuments durch eine erste Anwendung;
Erkennen einer Vielzahl von Referenzen innerhalb des ersten Dokuments, wobei die Vielzahl von Referenzen eine jeweilige Vielzahl von zweiten Dokumenten referenzieren;
Bestimmen einer ersten Referenz aus der Vielzahl von Referenzen, die wahrscheinlich für eine Vorschau durch einen Benutzer ausgewählt wird auf der Grundlage einer Benutzeraktivität mit dem dargestellten ersten Dokument;
Vorverarbeiten von Inhalten in dem zweiten Dokument, das durch die erste Referenz referenziert wird durch Erzeugen einer Inhaltsvorschau;
Darstellen eines Benutzerschnittstellenelements, in Antwort auf das Empfangen einer ersten Eingabe in der Nähe einer Darstellung der ersten Referenz, die in dem ersten Dokument angezeigt wird;
Darstellen der erzeugten Vorschau in Antwort auf ein Empfangen einer Eingabe auf dem Benutzerschnittstellenelement, während fortgefahren wird, das erste Dokument darzustellen.

2. Verfahren nach Anspruch 1, wobei das Darstellen des ersten Dokuments ein Anzeigen des ersten Dokuments in einem ersten Fenster beinhaltet und wobei das Erkennen der Vielzahl von Referenzen durch eine zweite Anwendung ausgeführt wird, die eingerichtet ist, um zumindest eines zu erkennen von: einer URL (Uniform Resource Locator), einer Straßenadresse, einer Telefonnummer, einer E-Mail-Adresse, einer ISBN-Nummer und eines Bilddateinamens, und wobei die Vorschau durch eine nicht-native Leseanwendung erzeugt wird, die von der ersten Anwendung unterschiedlich ist, die eingerichtet ist, das erste Dokument zu erzeugen und zu editieren.

3. Verfahren nach Anspruch 2, wobei die Vorschau eingerichtet ist, um Benutzereingabe zu empfangen und zu verarbeiten.

4. Verfahren nach einem der Ansprüche 1 bis 3, wobei das Darstellen des ersten Dokuments durch die erste Anwendung ein Anzeigen des ersten Dokuments in einem ersten Fenster beinhaltet, und wobei das Darstellen der Vorschau ein Darstellen der Vorschau in einer Blase beinhaltet, die über das erste Fenster gelegt ist.

5. Verfahren nach Anspruch 4, wobei die Vorschau durch eine nicht-native Leseanwendung erzeugt wird, die von der ersten Anwendung unterschiedlich ist, die eingerichtet ist, um das erste Dokument zu erzeugen und zu editieren, und wobei die nicht-native Leseanwendung das erste Dokument nicht editieren oder erzeugen kann.

6. Verfahren nach Anspruch 5, wobei in Antwort auf ein Erkennen einer zweiten Eingabe auf die Referenz das Verfahren weiter ein Öffnen eines Anzeigebereichs umfasst, der durch eine zweite Anwendung gesteuert wird, wobei die zweite Anwendung eingerichtet ist, um nativ den Inhalt, der durch die ersten Daten referenziert wird, darzustellen und die von der ersten Anwendung unterschiedlich ist.

7. Verfahren nach Anspruch 4, wobei das Darstellen der Vorschau ein Empfangen einer zweiten Eingabe beinhaltet, um eines zu veranlassen von: (a) Scrollen in der Vorschau, (b) Zoomen in der Vorschau, (c) Blättern durch die Vorschau und (d) Abspielen eines Films in der Vorschau, und wobei die erste Eingabe eine ist von (i) einem Schweben eines Cursors in der Nähe zu der Referenz, der durch eine Cursor-Steuervorrichtung gesteuert wird, oder (ii) einer ersten Berührungsgeste, und wobei die Eingabe auf dem Benutzerschnittstellenelement eine ist von (I) einem Drücken einer Taste während der Cursor in der Nähe der Referenz schwebt oder (II) einer zweiten Berührungsgeste.

8. Maschinenlesbares Medium, das Anweisungen umfasst, welche, wenn sie von der Maschine ausgeführt werden, die Maschine veranlassen die Handlungen nach einem der Ansprüche 1 bis 7 auszuführen.

9. System, umfassend:
Eine erste Anwendung, die eingerichtet ist zum Darstellen eines ersten Dokuments;
einen Datenerkenner, der eingerichtet ist zum:
Erkennen einer Vielzahl von Referenzen innerhalb des ersten Dokuments, wobei die Vielzahl von Referenzen eine jeweilige Vielzahl von zweiten Dokumenten referenzieren; und
Bestimmen einer ersten Referenz aus der Vielzahl von Referenzen, die wahrscheinlich für eine Vorschau durch einen Benutzer ausgewählt wird auf der Grundlage einer Benutzeraktivität mit dem dargestellten ersten Dokument;
einen Vorschauerzeuger, der eingerichtet ist zum:
Vorverarbeiten von Inhalten in dem zweiten Dokument, das durch die erste Referenz referenziert wird durch Erzeugen einer Inhaltsvorschau;
Darstellen eines Benutzerschnittstellenelements, in Antwort auf das Empfangen einer ersten Eingabe in der Nähe einer Darstellung der ersten Referenz, die in dem ersten Dokument angezeigt wird; und
Darstellen der erzeugten Vorschau in Antwort auf ein Empfangen einer Eingabe auf dem Benutzerschnittstellenelement, während fortgefahren wird, das erste Dokument darzustellen.

10. System nach Anspruch 9, wobei die erste Anwendung eingerichtet ist zum Darstellen des ersten Dokuments in einem ersten Fenster und wobei der Datenerkenner eingerichtet ist, um zumindest eines zu erkennen von: einer URL (Uniform Resource Locator), einer Straßenadresse, einer Telefonnummer, einer E-Mail-Adresse, einer ISBN-Nummer und eines Bilddateinamens, und wobei der Vorschauerzeuger eingerichtet ist die Vorschau zu erzeugen unter Verwendung einer nicht-nativen Leseanwendung, die von der ersten Anwendung unterschiedlich ist, die eingerichtet ist, das erste Dokument zu erzeugen und zu editieren.

11. System nach Anspruch 10, wobei der Datenerkenner die Vielzahl von Referenzen innerhalb des ersten Dokuments erkennt vor dem Empfangen der ersten Eingabe und wobei der Vorschauerzeuger eingerichtet ist, um eine Vorschau zu erzeugen, die Benutzerinteraktion mit der Vorschau erlaubt, und wobei die nicht native Leseanwendung das erste Dokument nicht editieren oder erzeugen kann.

12. System nach einem der Ansprüche 9 bis 11, wobei die erste Anwendung eingerichtet ist zum Darstellen des ersten Dokuments in einem ersten Fenster und wobei der Vorschaugenerator eingerichtet ist zum Darstellen der Vorschau durch Darstellen der Vorschau in einer Blase, die über das erste Fenster gelegt ist.

13. System nach Anspruch 12, wobei der Vorschaugenerator eingerichtet ist, die Vorschau zu erzeugen durch Verwendung einer nicht-nativen Leseanwendung, die von der ersten Anwendung unterschiedlich ist, die eingerichtet ist, um das erste Dokument zu erzeugen und zu editieren, und wobei die nicht-native Leseanwendung das erste Dokument nicht editieren oder erzeugen kann.

14. System nach Anspruch 13, wobei die erste Anwendung eingerichtet ist einen Link anzuzeigen, der einen aus der Vielzahl von Referenzen darstellt, und wobei der Datenerkenner eingerichtet ist zum Erkennen einer zweiten Eingabe auf den Link, wobei der Datenerkenner eingerichtet ist einen Anzeigebereich zu öffnen, der durch eine zweite Anwendung gesteuert wird, wobei die zweite Anwendung eingerichtet ist, um nativ den Inhalt, der durch die ersten Daten referenziert wird, darzustellen und die von der ersten Anwendung unterschiedlich ist.

15. System nach Anspruch 12, wobei der Vorschauerzeuger eingerichtet ist zum Empfangen einer zweiten Eingabe, um eines zu veranlassen von: (a) Scrollen in der Vorschau, (b) Zoomen in der Vorschau, (c) Blättern durch die Vorschau und (d) Abspielen eines Films in der Vorschau, und wobei die erste Eingabe eine ist von (i) einem Schweben eines Cursors in der Nähe zu der Referenz, der durch eine Cursor-Steuervorrichtung gesteuert wird, oder (ii) einer ersten Berührungsgeste, und wobei die Eingabe auf dem Benutzerschnittstellenelement eine ist von (I) einem Drücken einer Taste während der Cursor in der Nähe der Referenz schwebt oder (II) einer zweiten Berührungsgeste.

## Revendications

1. Procédé mis en oeuvre par machine comprenant :
la présentation d'un premier document par l'intermédiaire d'une première application ;
la détection d'une pluralité de références à l'intérieur du premier document, la pluralité de références référençant une pluralité respective de deuxièmes documents ;
la détermination d'une première référence parmi la pluralité de références qui est susceptible d'être sélectionnée pour une prévisualisation par un utilisateur sur la base d'une activité d'utilisateur avec le premier document présenté ;
le prétraitement d'un contenu dans le deuxième document référencé par la première référence par la création d'une prévisualisation de contenu ;
la présentation, en réponse à la réception d'une première entrée proche d'une représentation de la première référence affichée dans le premier document, d'un élément d'interface utilisateur ;
la présentation, en réponse à la réception d'une entrée sur l'élément d'interface utilisateur, de la prévisualisation de contenu créée tout en continuant de présenter le premier document.

2. Procédé selon la revendication 1, dans lequel la présentation du premier document comprend l'affichage du premier document dans une première fenêtre, et dans lequel la détection de la pluralité de références est effectuée par une deuxième application qui est configurée pour détecter au moins l'un de : un localisateur de ressource uniforme (URL), une adresse de rue, un numéro de téléphone, une adresse e-mail, un numéro ISBN et un nom de fichier d'image, et dans lequel la prévisualisation est créée par une application de liseuse non native qui est différente de la première application qui est configurée pour créer et modifier le premier document.

3. Procédé selon la revendication 2, dans lequel la prévisualisation est configurée pour recevoir et traiter une entrée d'utilisateur.

4. Procédé selon l'une quelconque des revendications 1 à 3, dans lequel la présentation du premier document par l'intermédiaire de la première application comprend l'affichage du premier document dans une première fenêtre et dans lequel la présentation de la prévisualisation comprend la présentation de la prévisualisation dans une bulle qui est superposée en haut de la première fenêtre.

5. Procédé selon la revendication 4, dans lequel la prévisualisation est créée par une application de liseuse non native qui est différente de la première application qui est configurée pour créer et modifier le premier document, et dans lequel l'application de liseuse non native ne peut pas modifier ou créer le premier document.

6. Procédé selon la revendication 5, dans lequel, en réponse à la détection d'une deuxième entrée sur la référence, le procédé comprend en outre l'ouverture d'une région d'affichage commandée par une deuxième application, la deuxième application étant configurée pour effectuer la présentation native du contenu référencé par les premières données et étant différente de la première application.

7. Procédé selon la revendication 4, dans lequel la présentation de la prévisualisation comprend la réception d'une deuxième entrée pour provoquer au moins l'un de :
(a) un défilement dans la prévisualisation, (b) un zoom dans la prévisualisation, (c) un changement de page dans la prévisualisation, et (d) la lecture d'un film dans la prévisualisation, et dans lequel la première entrée est l'un de : (i) le passage d'un curseur, commandé par un dispositif de commande de curseur, à proximité de la référence, ou (ii) un premier geste de toucher, et dans lequel l'entrée sur l'élément d'interface utilisateur est l'un de : (I) la pression d'un bouton en passant le curseur à proximité de la référence ou (II) un deuxième geste de toucher.

8. Support lisible par machine comprenant des instructions qui, lorsqu'elles sont effectuées par la machine, amènent la machine à effectuer les opérations selon l'une quelconque des revendications 1 à 7.

9. Système comprenant :
une première application configurée pour présenter un premier document ;
un détecteur de données configuré pour effectuer :
la détection d'une pluralité de références à l'intérieur du premier document, la pluralité de références référençant une pluralité respective de deuxièmes documents ; et
la détermination d'une première référence parmi la pluralité de références qui est susceptible d'être sélectionnée pour une prévisualisation par un utilisateur sur la base d'une activité d'utilisateur avec le premier document présenté ;
un générateur de prévisualisation configuré pour effectuer :
le prétraitement d'un contenu dans le deuxième document référencé par la première référence par la création d'une prévisualisation de contenu ; et
la présentation, en réponse à la réception d'une première entrée proche d'une représentation de la première référence affichée dans le premier document, d'un élément d'interface utilisateur ; et
la présentation, en réponse à la réception d'une entrée sur l'élément d'interface utilisateur, de la prévisualisation de contenu créée tout en continuant de présenter le premier document.

10. Système selon la revendication 9, dans lequel la première application est configurée pour effectuer la présentation du premier document dans une première fenêtre, et dans lequel le détecteur de données est configuré pour effectuer la détection d'au moins l'un de : un localisateur de ressource uniforme (URL), une adresse de rue, un numéro de téléphone, une adresse e-mail, un numéro ISBN et un nom de fichier d'image, et dans lequel le générateur de prévisualisation est configuré pour effectuer la création de la prévisualisation en utilisant une application de liseuse non native qui est différente de la première application qui est configurée pour créer et modifier le premier document.

11. Système selon la revendication 10, dans lequel le détecteur de données détecte la pluralité de références à l'intérieur du premier document avant de recevoir la première entrée et dans lequel le générateur de prévisualisation est configuré pour effectuer la génération d'une prévisualisation qui permet une interaction d'utilisateur avec la prévisualisation, et dans lequel l'application de liseuse non native ne peut pas modifier ou créer le premier document.

12. Système selon l'une quelconque des revendications 9 à 11, dans lequel la première application est configurée pour effectuer la présentation du premier document dans une première fenêtre et dans lequel le générateur de prévisualisation est configuré pour effectuer la présentation de la prévisualisation en affichant la prévisualisation dans une bulle qui est superposée en haut de la première fenêtre.

13. Système selon la revendication 12, dans lequel le générateur de prévisualisation est configuré pour effectuer la création de la prévisualisation en utilisant une application de liseuse non native qui est différente de la première application qui est configurée pour créer et modifier le premier document, et dans lequel l'application de liseuse non native ne peut pas modifier ou créer le premier document.

14. Système selon la revendication 13, dans lequel la première application est configurée pour effectuer l'affichage d'un lien représentant l'une de la pluralité de références, et dans lequel le détecteur de données est configuré pour effectuer la détection d'une deuxième entrée sur le lien et, en réponse à la détection d'une deuxième entrée sur le lien, le détecteur de données est configuré pour effectuer l'ouverture d'une région d'affichage commandée par une deuxième application, la deuxième application étant configurée pour effectuer la présentation native du contenu référencé par la première référence et étant différente de la première application.

15. Système selon la revendication 12, dans lequel le générateur de prévisualisation est configuré pour effectuer la réception d'une deuxième entrée pour provoquer au moins l'un de : (a) un défilement dans la prévisualisation, (b) un zoom dans la prévisualisation, (c) un changement de page dans la prévisualisation, et (d) la lecture d'un film dans la prévisualisation, et dans lequel la première entrée est l'un de : (i) le passage d'un curseur, commandé par un dispositif de commande de curseur, à proximité de la référence, ou (ii) un premier geste de toucher, et dans lequel l'entrée sur l'élément d'interface utilisateur est l'un de : (I) la pression d'un bouton en passant le curseur à proximité de la référence ou (II) un deuxième geste de toucher.
